# EUROPEAN PATENT APPLICATION

(11) **EP 4 447 588 A1**
(43) Date of publication of application: **16.10.2024**
(21) Application number: 23762816.9
(22) Date of filing: 24.02.2023
(51) Int. Cl.: H04W 72/04

(54) **COMMUNICATION METHOD, DEVICE AND SYSTEM**

(30) Priority: 01.03.2022 CN 202210194217
(71) Applicant: Huawei Technologies Co., Ltd., Shenzhen, Guangdong 518129 (CN)
(72) Inventor: ZHANG, Yi, Shenzhen, Guangdong 518129 (CN); SU, Hongjia, Shenzhen, Guangdong 518129 (CN); XIANG, Zhengzheng, Shenzhen, Guangdong 518129 (CN); LU, Lei, Shenzhen, Guangdong 518129 (CN)
(74) Representative: Pfenning, Meinig & Partner mbB
(86) International application number: PCT/CN2023/078031
(87) International publication number: WO 2023/165416

(57) **Abstract**

Embodiments of this application provide a communication method, apparatus, and system. In the method, a terminal apparatus that preempts a resource or may preempt a resource on an unlicensed spectrum performs avoidance in time for a terminal apparatus that reserves a resource, or shares a resource with a terminal apparatus that reserves a resource, so that the terminal apparatus that reserves the resource can send data in time. This meets a service requirement and significantly improves user experience.

## Description

This application claims priority to Chinese Patent Application No. 202210194217.5, filed with the China National Intellectual Property Administration on March 1, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

In a wireless communication system, used frequency bands may be classified into a licensed frequency band (i.e., licensed spectrum) and an unlicensed frequency band (i.e. unlicensed spectrum), and enabling sidelink (sidelink, SL) communication on the unlicensed frequency band in local space is an important evolution direction. Currently, when multiple user equipments (user equipments, UEs) communicate with each other on an unlicensed spectrum over a sidelink, the multiple user equipments need to autonomously contend for a resource, and UE that urgently needs to send data may fail to obtain the resource through contention. As a result, a service requirement cannot be met, and user experience is severely affected. Therefore, how to send to-be-transmitted data in time to meet a service requirement is an urgent problem to be resolved.

### SUMMARY

Embodiments of this application provide a communication method, apparatus, and system. According to the method, data can be sent in time, to meet a service requirement.

According to a first aspect, a communication method is provided. The method may include: A first terminal apparatus receives first indication information from a second terminal apparatus, where the first indication information indicates a first resource, the first resource is a resource reserved by the second terminal apparatus for sending first data, and a resource corresponding to the first resource in frequency domain belongs to a first channel; the first terminal apparatus determines a second resource based on the first indication information; and the first terminal apparatus sends second data on the second resource, where a start time unit of the second resource is later than an end time unit of the first resource, and a resource corresponding to the second resource in frequency domain belongs to the first channel.

According to the method, the first terminal apparatus defers accessing a channel, and performs avoidance in time for the second terminal apparatus on an occasion for accessing the channel, so that the second terminal apparatus can send data on a reserved resource. This reduces a data transmission delay, meets a service requirement, and improves communication efficiency.

With reference to the first aspect, in some implementations of the first aspect, the first terminal apparatus senses, in a first sensing time unit by using a listen-before-talk process, that a state of the first channel is idle, and suspends the listen-before-talk process in the first sensing time unit based on the first resource, where the first sensing time unit is earlier than a start time unit of the first resource.

With reference to the first aspect, in some implementations of the first aspect, duration between the start time unit of the first resource and a 1^{st} sensing time unit in which a value of a counter is M is less than or equal to a first threshold, where the first threshold is greater than 0 and is less than a delay requirement of the second data.

In this manner, duration of a time period in which the first terminal apparatus stops progressively decreasing the counter is less than a specific threshold. Because neither the first terminal apparatus nor the second terminal apparatus accesses a channel in the time period, a waste of resources can be avoided by limiting the duration of the time period.

With reference to the first aspect, in some implementations of the first aspect, after progressively decreasing the value of the counter to M, the first terminal apparatus suspends the progressive decrease, where 1≤M≤Q, and Q is an initial value of the counter.

With reference to the first aspect, in some implementations of the first aspect, the first threshold is determined based on duration corresponding to the second resource in time domain.

With reference to the first aspect, in some implementations of the first aspect, the first terminal apparatus senses, in a second sensing time unit, that a state of the first channel is idle, and continues to progressively decrease the value of the counter from M, where the second sensing time unit is later than the end time unit of the first resource, and the start time unit of the second resource is a time unit in which the value of the counter is progressively decreased to 0.

In this manner, the first terminal apparatus may access the channel after data sending of the second terminal apparatus ends, and to-be-sent data of the first terminal apparatus can be normally sent. This further meets a service requirement, and avoids a waste of time frequency resources after a resource used by the second terminal apparatus to send data.

With reference to the first aspect, in some implementations of the first aspect, the first terminal apparatus receives a first reference signal from the second terminal apparatus, and the first terminal apparatus determines that power for receiving the first reference signal is greater than or equal to a reference signal received power threshold.

After the first terminal apparatus shares a resource with the second terminal apparatus, if reference signal received power of the second terminal apparatus is lower than the threshold, another device near the first terminal apparatus cannot be silent. As a result, the channel may be occupied by the another device, and the first terminal apparatus cannot re-access the channel in the resource. Therefore, when the reference signal received power of the second terminal apparatus is greater than or equal to the reference signal received power threshold, the first terminal apparatus determines to perform avoidance. This prevents a resource from being preempted by an apparatus other than the second terminal apparatus after the first terminal apparatus performs avoidance, improves a success rate of accessing the channel by the second terminal apparatus, and further improves communication efficiency.

With reference to the first aspect, in some implementations of the first aspect, the first terminal apparatus receives third indication information from the second terminal apparatus, where the third indication information indicates that the first terminal apparatus is a destination end to which the second terminal apparatus sends data.

In this manner, when the first terminal apparatus is a data receive end (the destination end) of the second terminal apparatus, the first terminal apparatus performs avoidance for the second terminal apparatus, and can receive the data in time. This meets a service requirement.

With reference to the first aspect, in some implementations of the first aspect, the first terminal apparatus receives fourth indication information from the second terminal apparatus, where the fourth indication information indicates a priority of the first data, and the first terminal apparatus determines that the priority of the first data is higher than or equal to a priority of the second data.

In this manner, the first terminal apparatus performs avoidance for an apparatus corresponding to data with a higher priority, so that a service requirement of the data with the higher priority can be met in time.

With reference to the first aspect, in some implementations of the first aspect, the first indication information is carried in at least one of first-stage sidelink control information, second-stage sidelink control information, a sidelink media access control control element, or radio resource control signaling used for communication (PC5) between user equipments from the second terminal apparatus.

With reference to the first aspect, in some implementations of the first aspect, the third indication information is carried in at least one of first-stage sidelink control information, second-stage sidelink control information, a sidelink media access control control element, or PC5 radio resource control signaling from the second terminal apparatus.

With reference to the first aspect, in some implementations of the first aspect, the fourth indication information is carried in at least one of first-stage sidelink control information, second-stage sidelink control information, a sidelink media access control control element, or PC5 radio resource control signaling from the second terminal apparatus.

It should be understood that the foregoing indication information may alternatively be carried in signaling configured by another network device or preconfigured signaling.

According to a second aspect, a communication method is provided. The method may include: A first terminal apparatus receives first indication information from a second terminal apparatus, where the first indication information indicates a first resource, and the first resource is a resource reserved by the second terminal apparatus for sending first data; the first terminal apparatus determines a third resource based on the first resource and first channel occupancy time, where the third resource belongs to the first resource and the first channel occupancy time, and the third resource is used by the second terminal apparatus to send data; and the first terminal apparatus sends data on a fourth resource, where the fourth resource belongs to a resource other than the third resource in the first channel occupancy time.

The first channel occupancy time may be duration corresponding to a fifth resource in time domain. In other words, the first terminal apparatus receives the first indication information from the second terminal apparatus, where the first indication information indicates the first resource, and the first resource is the resource reserved by the second terminal apparatus for sending the first data; the first terminal apparatus determines the fifth resource, where a start time unit of the fifth resource is earlier than a start time unit of the first resource, and the fifth resource overlaps the first resource; the first terminal apparatus determines the third resource based on the first resource and the fifth resource, where the third resource belongs to an overlap between the first resource and the fifth resource, and the third resource is used by the second terminal apparatus to send the first data; and the first terminal apparatus sends second data on a fourth resource, where the fourth resource belongs to a part, other than the third resource, in the fifth resource.

In the method, the first terminal apparatus shares a resource with the second terminal apparatus, so that data of the second terminal apparatus can be sent in time. This meets a service requirement.

With reference to the second aspect, in some implementations of the second aspect, the first terminal apparatus sends second indication information to the second terminal apparatus, where the second indication information indicates the third resource.

In this manner, the first terminal apparatus indicates a shared resource to the second terminal apparatus, so that the second terminal apparatus quickly determines the resource. This further reduces a delay in sending data by the second terminal apparatus.

With reference to the second aspect, in some implementations of the second aspect, the first terminal apparatus sends the second indication information to the second terminal apparatus in a first time period, where a start moment of the first time period falls within a range between a start time unit of the fourth resource and a start time unit of the third resource, and duration between the start moment of the first time period and the start time unit of the fourth resource is greater than or equal to a second threshold.

For example, the second threshold may be T_{proc,0}.

The first terminal apparatus needs to ensure that there is sufficient time for sending the first indication information and the second terminal has sufficient time for decoding the indication information. Otherwise, the first indication information cannot be sent, or the second terminal apparatus cannot learn of a resource location when the first indication information fails to be sent. In this case, neither the first terminal apparatus nor the second terminal apparatus uses the third resource. This manner avoids a waste of resources.

With reference to the second aspect, in some implementations of the second aspect, the first terminal apparatus receives third indication information from the second terminal apparatus, where the third indication information indicates that the first terminal apparatus is a destination end to which the second terminal apparatus sends data.

When the first terminal apparatus is a data receive end (destination end) of the second terminal apparatus, the first terminal apparatus shares a resource with the second terminal apparatus, and can receive the data in time. This meets a service requirement.

With reference to the second aspect, in some implementations of the second aspect, the first terminal apparatus receives fourth indication information from the second terminal apparatus, where the fourth indication information indicates a priority of the first data, and the first terminal apparatus determines that the priority of the first data is higher than or equal to a priority of the second data.

In this manner, the first terminal apparatus shares a resource with an apparatus corresponding to data with a higher priority, so that a service requirement of the data with the higher priority can be met in time.

With reference to the second aspect, in some implementations of the second aspect, the first terminal apparatus receives a first reference signal from the second terminal apparatus, and the first terminal apparatus determines that power for receiving the first reference signal is greater than or equal to a reference signal received power threshold.

After the first terminal apparatus shares a resource with the second terminal apparatus, if reference signal received power of the second terminal apparatus is lower than the threshold, another device near the first terminal apparatus cannot be silent. As a result, a channel may be occupied by the another device, and the first terminal apparatus cannot re-access the channel in the resource. Therefore, when the reference signal received power of the second terminal apparatus is greater than or equal to the reference signal received power threshold, the first terminal apparatus determines to perform avoidance. This prevents a resource from being preempted by an apparatus other than the second terminal apparatus after the first terminal apparatus performs avoidance, improves a success rate of accessing the channel by the second terminal apparatus, and further improves communication efficiency.

With reference to the second aspect, in some implementations of the second aspect, the first indication information is carried in at least one of first-stage sidelink control information, second-stage sidelink control information, a sidelink media access control control element, or radio resource control signaling from the second terminal apparatus.

With reference to the second aspect, in some implementations of the second aspect, the second indication information is carried in at least one of first-stage sidelink control information, second-stage sidelink control information, a sidelink media access control control element, or PC5 radio resource control signaling from the first terminal apparatus.

With reference to the second aspect, in some implementations of the second aspect, the third indication information is carried in at least one of first-stage sidelink control information, second-stage sidelink control information, a sidelink media access control control element, or PC5 radio resource control signaling from the second terminal apparatus.

With reference to the second aspect, in some implementations of the second aspect, the fourth indication information is carried in at least one of first-stage sidelink control information, second-stage sidelink control information, a sidelink media access control control element, or PC5 radio resource control signaling from the second terminal apparatus.

It should be understood that the foregoing indication information may alternatively be carried in signaling configured by another network device or preconfigured signaling.

According to a third aspect, a communication method is provided. The method may include: A second terminal apparatus sends first indication information, where the first indication information indicates a first resource, and the first resource is a resource reserved by the second terminal apparatus for sending first data; and the second terminal apparatus sends the first data on a third resource, where the third resource is determined based on the first resource and first channel occupancy time, the third resource belongs to the first resource and the first channel occupancy time, and a start time unit of the first channel occupancy time is earlier than a start time unit of the first resource.

With reference to the third aspect, in some implementations of the third aspect, the second terminal apparatus receives second indication information from a first terminal apparatus, where the second indication information indicates the third resource.

With reference to the third aspect, in some implementations of the third aspect, the second terminal apparatus receives the second indication information from the first terminal apparatus in a first time period, where a start moment of the first time period falls within a range between a start time unit of the fourth resource and a start time unit of the third resource, and duration between the start moment of the first time period and the start time unit of the fourth resource is greater than or equal to a second threshold.

For example, the second threshold may be T_{proc,0}.

With reference to the third aspect, in some implementations of the third aspect, the second terminal apparatus sends third indication information, where the third indication information indicates that the first terminal apparatus is a destination end to which the second terminal apparatus sends data.

With reference to the third aspect, in some implementations of the third aspect, the second terminal apparatus sends a first reference signal.

With reference to the third aspect, in some implementations of the third aspect, the first indication information is carried in at least one of first-stage sidelink control information, second-stage sidelink control information, a sidelink media access control control element, or PC5 radio resource control signaling from the second terminal apparatus.

With reference to the third aspect, in some implementations of the third aspect, the second indication information is carried in at least one of first-stage sidelink control information, second-stage sidelink control information, a sidelink media access control control element, or PC5 radio resource control signaling from the first terminal apparatus.

With reference to the third aspect, in some implementations of the third aspect, the third indication information is carried in at least one of first-stage sidelink control information, second-stage sidelink control information, a sidelink media access control control element, or PC5 radio resource control signaling from the second terminal apparatus.

With reference to the third aspect, in some implementations of the third aspect, fourth indication information is carried in at least one of first-stage sidelink control information, second-stage sidelink control information, a sidelink media access control control element, or radio resource control signaling from the second terminal apparatus.

It should be understood that the third aspect is an implementation of the second terminal apparatus corresponding to the first terminal apparatus in the second aspect, and explanations, supplements, and beneficial effects of the second aspect are also applicable to the third aspect. Details are not described again.

According to a fourth aspect, a communication apparatus is provided. The communication apparatus includes a transceiver unit and a processing unit. The transceiver unit is configured to receive first indication information from a second terminal apparatus, where the first indication information indicates a first resource, the first resource is a resource reserved by the second terminal apparatus for sending first data, and a resource corresponding to the first resource in frequency domain belongs to a first channel. The processing unit is configured to determine a second resource based on the first indication information. The transceiver unit is further configured to send second data on the second resource, where a start time unit of the second resource is later than an end time unit of the first resource, and a resource corresponding to the second resource in frequency domain belongs to the first channel.

With reference to the fourth aspect, in some implementations of the fourth aspect, the processing unit is configured to sense, in a first sensing time unit by using a listen-before-talk process, that a state of the first channel is idle, and the processing unit is further configured to suspend the listen-before-talk process in the first sensing time unit based on the first resource, where the first sensing time unit is earlier than a start time unit of the first resource.

With reference to the fourth aspect, in some implementations of the fourth aspect, duration between the start time unit of the first resource and a 1^{st} sensing time unit in which a value of a counter is M is less than or equal to a first threshold, where the first threshold is greater than 0 and is less than a delay requirement of the second data.

With reference to the fourth aspect, in some implementations of the fourth aspect, the processing unit is configured to: after progressively decreasing the value of the counter to M, suspend the progressive decrease, where 1≤M≤Q, and Q is an initial value of the counter.

With reference to the fourth aspect, in some implementations of the first aspect, the first threshold is determined based on duration corresponding to the second resource in time domain.

With reference to the fourth aspect, in some implementations of the fourth aspect, the processing unit is further configured to: determine, in a second sensing time unit, that a state of the first channel is idle, and continue to progressively decrease the value of the counter from M, where the second sensing time unit is later than the end time unit of the first resource, and the start time unit of the second resource is a time unit in which the value of the counter is progressively decreased to 0.

With reference to the fourth aspect, in some implementations of the fourth aspect, the transceiver unit is further configured to receive fourth indication information from the second terminal apparatus, where the fourth indication information indicates a priority of the first data, and the first terminal apparatus determines that the priority of the first data is higher than or equal to a priority of the second data.

With reference to the fourth aspect, in some implementations of the fourth aspect, the first indication information is carried in at least one of first-stage sidelink control information, second-stage sidelink control information, a sidelink media access control control element, or radio resource control signaling from the second terminal apparatus.

With reference to the fourth aspect, in some implementations of the fourth aspect, the third indication information is carried in at least one of first-stage sidelink control information, second-stage sidelink control information, a sidelink media access control control element, or radio resource control signaling from the second terminal apparatus.

With reference to the fourth aspect, in some implementations of the fourth aspect, the fourth indication information is carried in at least one of first-stage sidelink control information, second-stage sidelink control information, a sidelink media access control control element, or radio resource control signaling from the second terminal apparatus.

It should be understood that the fourth aspect is an apparatus-side implementation corresponding to the first aspect, and explanations, supplements, and beneficial effects of the first aspect are also applicable to the fourth aspect. Details are not described again.

According to a fifth aspect, a communication apparatus is provided. The communication apparatus includes a transceiver unit and a processing unit. The transceiver unit is configured to receive first indication information from a second terminal apparatus, where the first indication information indicates a first resource, and the first resource is a resource reserved by the second terminal apparatus for sending first data. The processing unit is configured to determine a third resource based on the first resource and first channel occupancy time, where the third resource belongs to the first resource and the first channel occupancy time, and the third resource is used by the second terminal apparatus to send second data. The transceiver unit is further configured to send the first data on a fourth resource, where the fourth resource belongs to a resource other than the third resource in the first channel occupancy time.

With reference to the fifth aspect, in some implementations of the fifth aspect, the transceiver unit is further configured to send second indication information to the second terminal apparatus, where the second indication information indicates the third resource.

With reference to the fifth aspect, in some implementations of the fifth aspect, the transceiver unit is specifically configured to send the second indication information to the second terminal apparatus in a first time period, where a start moment of the first time period falls within a range between a start time unit of the fourth resource and a start time unit of the third resource, and duration between the start moment of the first time period and the start time unit of the fourth resource is greater than or equal to a second threshold.

For example, the second threshold may be T_{proc,0}.

With reference to the fifth aspect, in some implementations of the fifth aspect, the transceiver unit is further configured to receive third indication information from the second terminal apparatus, where the third indication information indicates that a first terminal apparatus is a destination end to which the second terminal apparatus sends the first data.

With reference to the fifth aspect, in some implementations of the fifth aspect, the transceiver unit is further configured to receive fourth indication information from the second terminal apparatus, where the fourth indication information indicates a priority of the first data; and the processing unit is further configured to determine that the priority of the first data is higher than or equal to a priority of the second data.

With reference to the fifth aspect, in some implementations of the fifth aspect, the transceiver unit receives a first reference signal from the second terminal apparatus, and the processing unit is further configured to determine that power for receiving the first reference signal is greater than or equal to a reference signal received power threshold.

With reference to the fifth aspect, in some implementations of the fifth aspect, the first indication information is carried in at least one of first-stage sidelink control information, second-stage sidelink control information, a sidelink media access control control element, or radio resource control signaling from the second terminal apparatus.

With reference to the fifth aspect, in some implementations of the fifth aspect, the second indication information is carried in at least one of first-stage sidelink control information, second-stage sidelink control information, a sidelink media access control control element, or PC5 radio resource control signaling from the first terminal apparatus.

With reference to the fifth aspect, in some implementations of the fifth aspect, the third indication information is carried in at least one of first-stage sidelink control information, second-stage sidelink control information, a sidelink media access control control element, or PC5 radio resource control signaling from the second terminal apparatus.

With reference to the fifth aspect, in some implementations of the fifth aspect, the fourth indication information is carried in at least one of first-stage sidelink control information, second-stage sidelink control information, a sidelink media access control control element, or PC5 radio resource control signaling from the second terminal apparatus.

It should be understood that the fifth aspect is an apparatus-side implementation corresponding to the second aspect, and explanations, supplements, and beneficial effects of the second aspect are also applicable to the fifth aspect. Details are not described again.

According to a sixth aspect, a communication apparatus is provided. The communication apparatus includes a transceiver unit and a processing unit. The transceiver unit is configured to send first indication information, where the first indication information indicates a first resource, and the first resource is a resource reserved by a second terminal apparatus for sending first data. The transceiver unit is further configured to send the first data on a third resource, where the third resource is determined based on the first resource and first channel occupancy time, the third resource belongs to the first resource and the first channel occupancy time, and a start time unit of the first channel occupancy time is earlier than a start time unit of the first resource.

With reference to the sixth aspect, in some implementations of the sixth aspect, the transceiver unit is configured to receive second indication information from a first terminal apparatus, where the second indication information indicates the third resource.

With reference to the sixth aspect, in some implementations of the sixth aspect, the transceiver unit is specifically configured to receive the second indication information from the first terminal apparatus in a first time period, where a start moment of the first time period falls within a range between a start time unit of the fourth resource and a start time unit of the third resource, and duration between the start moment of the first time period and the start time unit of the fourth resource is greater than or equal to a second threshold.

For example, the second threshold may be T_{proc,0}.

With reference to the sixth aspect, in some implementations of the sixth aspect, the transceiver unit is further configured to send third indication information, where the third indication information indicates that the first terminal apparatus is a destination end to which the second terminal apparatus sends the first data.

With reference to the sixth aspect, in some implementations of the sixth aspect, the transceiver unit is further configured to send a first reference signal.

With reference to the sixth aspect, in some implementations of the sixth aspect, the first indication information is carried in at least one of first-stage sidelink control information, second-stage sidelink control information, a sidelink media access control control element, or PC5 radio resource control signaling from the second terminal apparatus.

With reference to the sixth aspect, in some implementations of the sixth aspect, the second indication information is carried in at least one of first-stage sidelink control information, second-stage sidelink control information, a sidelink media access control control element, or PC5 radio resource control signaling from the first terminal apparatus.

With reference to the sixth aspect, in some implementations of the sixth aspect, the third indication information is carried in at least one of first-stage sidelink control information, second-stage sidelink control information, a sidelink media access control control element, or PC5 radio resource control signaling from the second terminal apparatus.

With reference to the sixth aspect, in some implementations of the sixth aspect, the fourth indication information is carried in first-stage sidelink control information, a sidelink media access control control element, or radio resource control signaling from the second terminal apparatus.

It should be understood that the sixth aspect is an apparatus-side implementation corresponding to the third aspect, and explanations, supplements, and beneficial effects of the third aspect are also applicable to the sixth aspect. Details are not described again.

According to a seventh aspect, a computer-readable medium is provided. The computer-readable medium stores program code to be executed by a communication apparatus, and the program code includes instructions used to implement the communication method according to the first aspect, the second aspect, or the third aspect, any one of the possible implementations of the first aspect, the second aspect, or the third aspect, or all the possible implementations of the first aspect, the second aspect, or the third aspect.

According to an eighth aspect, a computer program product including instructions is provided. When the computer program product runs on a computer, the computer is enabled to perform the method according to the first aspect, the second aspect, or the third aspect, any one of the possible implementations of the first aspect, the second aspect, or the third aspect, or all the possible implementations of the first aspect, the second aspect, or the third aspect.

According to a ninth aspect, a communication system is provided. The communication system includes the apparatus configured to implement functions in the method or various possible designs according to the first aspect, the second aspect, or the third aspect, any one of the possible implementations of the first aspect, the second aspect, or the third aspect, or all the possible implementations of the first aspect, the second aspect, or the third aspect.

According to a tenth aspect, a processor is provided, configured to: be coupled to a memory, and perform the method according to the first aspect, the second aspect, or the third aspect, any one of the possible implementations of the first aspect, the second aspect, or the third aspect, or all the possible implementations of the first aspect, the second aspect, or the third aspect.

According to an eleventh aspect, a chip is provided. The chip includes a processor and a communication interface. The communication interface is configured to communicate with an external component or an internal component. The processor is configured to implement the method according to the first aspect, the second aspect, or the third aspect, any one of the possible implementations of the first aspect, the second aspect, or the third aspect, or all the possible implementations of the first aspect, the second aspect, or the third aspect.

Optionally, the chip may further include a memory. The memory stores instructions. The processor is configured to execute the instructions stored in the memory or instructions from another module. When the instructions are executed, the processor is configured to implement the method in any one of the first aspect, the second aspect, the third aspect, or the possible implementations thereof.

Optionally, the chip may be integrated into a terminal device and/or a network device.

### BRIEF DESCRIPTION OF DRAWINGS

FIG. 1 shows a system architecture to which an embodiment of this application is applicable;
FIG. 2 shows slots to which an embodiment of this application is applicable;
FIG. 3 shows a listen-before-talk process to which an embodiment of this application is applicable;
FIG. 4 shows another listen-before-talk process to which an embodiment of this application is applicable;
FIG. 5 is a diagram of a communication method according to an embodiment of this application;
FIG. 6 is a diagram of a transmission resource according to an embodiment of this application;
FIG. 7 is a schematic flowchart of a communication method according to an embodiment of this application;
FIG. 8 is a diagram of another communication method according to an embodiment of this application;
FIG. 9 is a schematic flowchart of another communication method according to an embodiment of this application;
FIG. 10 is a diagram of another transmission resource according to an embodiment of this application;
FIG. 11 is a schematic flowchart of another communication method according to an embodiment of this application;
FIG. 12 is a diagram of another transmission resource according to an embodiment of this application;
FIG. 13 is a block diagram of a communication apparatus according to an embodiment of this application; and
FIG. 14 is a block diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a 5G 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, or the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or other communication systems.

In addition, the technical solutions provided in embodiments of this application may be applied to a link between a network device and a terminal device, or may be applied to a link between devices, for example, a device-to-device (device to device, D2D) link. The D2D link may also be referred to as a sidelink, and the sidelink may also be referred to as a side-link, a secondary link, or the like. In embodiments of this application, a D2D link, a side-link, or a secondary link is a link established between devices of a same type, and has a same meaning. The link between the devices of the same type may be a link between terminal devices, a link between network devices, a link between relay nodes, or the like. This is not limited in embodiments of this application. For the link between the terminal devices, there is a D2D link defined in release (release, Rel)-12/13 of the 3rd generation partnership project (3rd generation partnership project, 3GPP), and there is also a vehicle-to-everything link defined by the 3GPP for the internet of vehicles. It should be understood that V2X specifically further includes vehicle-to-vehicle (vehicle-to-vehicle, V2V), vehicle-to-infrastructure (vehicle-to-infrastructure, V2I), vehicle-to-pedestrian (vehicle-to-pedestrian, V2P) direct communication, and vehicle-to-network (vehicle-to-network, V2N), or vehicle-to-any entity V2X link, including a V2X link in Rel-14/15. V2X further includes an NR system-based V2X link in Rel-16 and later releases that are currently being studied by the 3GPP, and the like. V2V is communication between vehicles. V2P is communication between a vehicle and a person (including a pedestrian, a cyclist, a driver, and a passenger). V2I is communication between a vehicle and an infrastructure, where the infrastructure is, for example, a roadside unit (roadside unit, RSU) or a network device. In addition, V2N may be included in V2I, and V2N is communication between a vehicle and a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU.

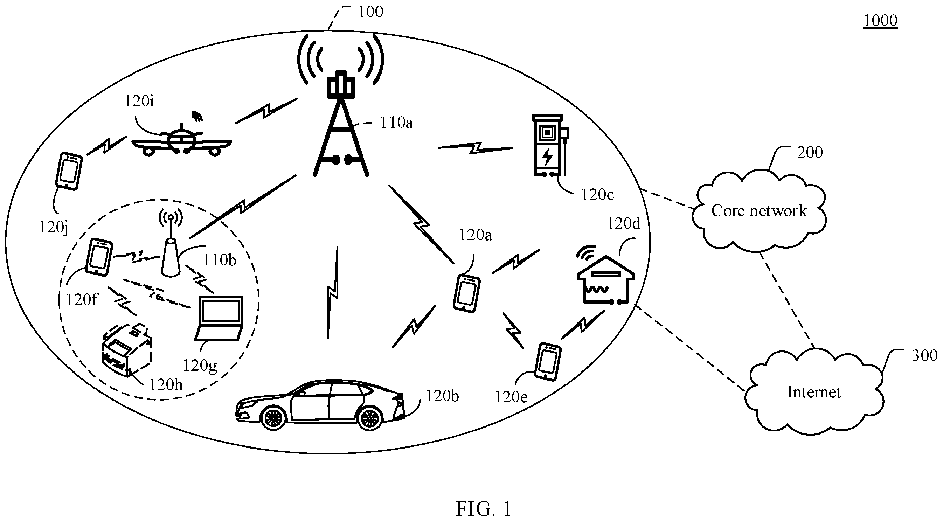

The following provides a diagram of an architecture of a mobile communication system to which embodiments of this application are applied. FIG. 1 is a diagram of an architecture of a communication system 1000 to which an embodiment of this application is applied. As shown in FIG. 1, the communication system includes a radio access network 100. Optionally, the communication system 1000 may further include a core network 200 and an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device. This is not shown in FIG. 1.

It should be understood that in the communication system in this application, an information transmit end may be a network device or a terminal device, and an information receive end may be a network device or a terminal device. This is not limited in this application.

In embodiments of this application, UE may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides a user with voice/data. For example, the terminal device may be a handheld device or a vehicle-mounted device having a wireless connection function. The terminal device may include user equipment, and is sometimes referred to as a terminal, an access station, a UE station, a remote station, a wireless communication device, a user apparatus, or the like. The terminal device is configured to connect a person, an object, a machine, and the like, and may be widely used in various scenarios. For example, the terminal device includes but is not limited to a terminal device used in the following scenarios: cellular communication, D2D, V2X, machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, and a robot. For example, the terminal device may be a mobile phone (mobile phone), a tablet computer (pad), a computer with a wireless transceiver function, a VR terminal, an AR terminal, a wireless terminal in industrial control, a vehicle, a wireless communication module in a vehicle, a vehicle-mounted T-box (Telematics BOX), a roadside unit RSU, a wireless terminal in self driving, a smart speaker in an IoT network, a wireless terminal device in telemedicine, a wireless terminal device in a smart grid, a wireless terminal device in transportation security, a wireless terminal device in a smart city, a wireless terminal device in a smart home, or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, for example, smart watches or smart glasses, and devices that focus on only one type of application and need to be used together with other devices such as smartphones, such as various smart bands or smart jewelry used for monitoring physical signs. In addition, the terminal device in embodiments of this application may alternatively be a terminal device in an IoT system. An IoT is an important part of future development of information technologies. A main technical feature of the IoT is connecting a thing to a network by using a communication technology, to implement an intelligent network for interconnection between a person and a machine or between things.

If various terminal devices described above are located in a vehicle (for example, placed in the vehicle or installed in the vehicle), the terminal devices may be all considered as vehicle-mounted terminal devices. The vehicle-mounted terminal devices are also referred to as, for example, on-board units (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement the method in this application.

It should be understood that a network device in the wireless communication system may be a device that can communicate with a terminal device, and the network device may also be referred to as an access network device or a radio access network device. For example, the network device may be a base station. A network device in embodiments of this application may be a radio access network (radio access network, RAN) node (or device) that connects the terminal device to a wireless network. The base station may cover following various names in a broad sense, or may be replaced with the following names, for example, a NodeB (NodeB), an evolved NodeB (evolved NodeB, eNB), a next generation NodeB (next generation NodeB, gNB, or it is also be called future NodeB), a relay station, an access point, a transmission reception point (transmitting and receiving point, TRP), a transmission point (transmitting point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or may be a combination thereof. The base station may alternatively be a communication module, a modem, or a chip disposed in the foregoing device or apparatus. The base station may alternatively be a mobile switching center, a device that implements a base station function in D2D, V2X, and M2M communication, a network side device in a future network (i.e., future communication network), a device that implements a base station function in a future communication system, or the like. The base station may support networks of a same access technology or different access technologies. A specific technology and a specific device form that are used by the network device are not limited in embodiments of this application.

In embodiments of this application, a base station function may be performed by a module (for example, a chip) in a base station, or may be performed by a control subsystem that has the base station function. The control subsystem that has the base station function herein may be a control center in the foregoing application scenarios, such as a smart grid, industrial control, smart transportation, and a smart city. A terminal function may be performed by a module (for example, a chip or a modem) in a terminal, or may be performed by an apparatus that has the terminal function.

For ease of understanding this application, a random access process and related concepts are briefly described.
1. Interface: A communication interface (Uu interface) between user equipment and a network device may be referred to as a Uu interface, a communication interface (PC5 interface) between user equipments may be referred to as a PC5 interface, and a transmission link in the PC5 interface is defined as a sidelink (sidelink, SL).
2. Unlicensed spectrum (unlicensed spectrum): In a wireless communication system, used frequency bands may be classified into a licensed spectrum and an unlicensed spectrum. On the licensed spectrum, a user uses a spectrum resource based on scheduling of a central node. On the unlicensed spectrum, a transmit node needs to use a spectrum resource through contention. Specifically, the transmit node contends for a channel in a listen-before-talk (listen-before-talk, LBT) manner. In a new-generation 5G NR system, NR protocol technologies on unlicensed spectrums are collectively referred to as NR-U, and communication performance of a corresponding Uu interface is expected to be further improved by using the NR-U. Enabling SL communication on the unlicensed spectrum in local space is an important evolution direction, and corresponding protocol technologies may be collectively referred to as SL-U. Similar to the Uu interface, UE that works by using the SL-U also need to coexist with a nearby Wi-Fi device based on an LBT mechanism. A reason why the LBT mechanism becomes a mandatory feature of the unlicensed spectrum is that each region in the world has a regulation (regulation) requirement on use of the unlicensed spectrum. UEs in various forms working in different communication protocols can use the unlicensed spectrum only when a regulation is met. In this way, the UEs can fairly and efficiently use spectrum resources.
3. Time domain resource: One or more time units are included in time domain of an SL resource pool, and the time units may be one or more symbols, one or more slots (slots), one or more mini-slots (mini-slots), one or more subframes, one or more frames, or the like. The one or more time units may be continuous or discrete in time. It should be understood that time domain units in a resource pool are logically continuous. In embodiments of this application, for understanding of definitions of a symbol, a mini-slot, a slot, a subframe, and a frame, refer to 3GPP TS 38.211.

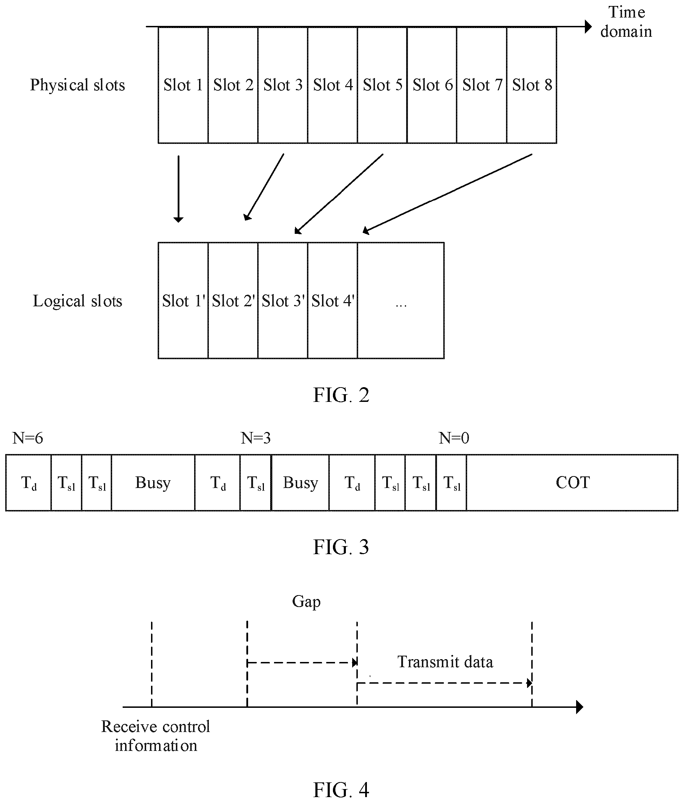

As shown in FIG. 2, a slot 1 to a slot 8 are continuous slots in time, and the slots are referred to as physical slots (physical slots). Physical slots: the slot 1, a slot 3, a slot 5, and the slot 8, are configured as slots that belong to a same resource pool. Slots included in the resource pool may not be continuous in time. Therefore, from a perspective of the resource pool, the physical slots: the slot 1, the slot 3, the slot 5, and the slot 8, correspond to a slot 1', a slot 2', a slot 3', and a slot 4' in the resource pool. Continuous slots (that is, the slot 1', the slot 2', the slot 3', and the slot 4') included in the resource pool are continuous slots from a logic of the resource pool, and the slots that are logically continuous but not necessarily continuous in time are referred to as logical slots (logical slots).

Start time unit: A start time unit is a first time unit of a resource in time domain.

End time unit: An end time unit is a last time unit of a resource in time domain.

In an example in which a slot is a time unit, a resource shown in FIG. 2 includes the slot 1 to the slot 8 in time domain. In this case, the slot 1 is a start time unit of the resource, and the slot 8 is an end time unit of the resource.

4. Frequency domain resource: One or more frequency domain units are included in frequency domain of an SL resource pool, and the frequency domain units may be one resource element (resource element, RE) or several REs, one resource block (resource block, RB) or several RBs, or one sub-channel (sub-channel) or several sub-channels. A size of one sub-channel indicates a quantity of one or more RBs that are included in one sub-channel and that are continuous (continuous) or interlaced (interlaced) in frequency domain, and may be an integer like 10, 12, 15, 20, 25, or 50.

5. Sidelink resource allocation mode: An NR SL supports two resource allocation modes: a mode 1 and a mode 2.

Mode 1 (SL mode 1): A network device allocates a resource used for sidelink transmission, and the mode 1 is usually for sidelink communication within a coverage area of the network device.

Mode 2 (SL mode 2): UE autonomously selects a resource for sidelink transmission. A manner of autonomously selecting a resource: A transmit end UE autonomously selects a transmission resource in a resource selection window for communication based on a sensing result in a sensing window of the transmit end UE. It is assumed that the transmit end UE triggers resource selection in a slot n. A specific resource selection procedure is as follows:
Step 1: Determine a resource selection window [n+T₁, n+T₂], where 0≤T₁≤T_{(proc,1)}^{SL}, T₂ₘᵢₙ≤T₂≤PDB (a delay of a data packet), and T₁ and T₂ are selected based on an implementation.
Step 2: Determine a sensing window [n-T₀, n-T_{(proc,0})^{SL}].
Step 3: Determine a reference signal received power (reference signal received power, RSRP) threshold, where the RSRP threshold and a priority *prio*_{TX} of to-be-sent data are related to a priority *prio*_{RX} indicated by received sidelink control information (sidelink control information, SCI), and the RSRP threshold is specifically a (*prio*_{RX}+(*prio*_{TX}-1)*8)^{th} threshold in an RSRP threshold set configured by a resource pool.
Step 4: Initialize an available resource set *S_{A}* to include all time frequency resources (in units of one slot and one sub-channel) in the resource selection window.
Step 5: Exclude, from *S_{A}*, time frequency resources, in reserved slots, that are of all periodic resources configured by the resource pool and that correspond to slots (slots in which sending is performed) that are not sensed in the sensing window.
   If a quantity of time frequency resources excluded from *S_{A}* is less than X% of total resources in the resource selection window, initialization in step 4 is performed again.
Step 6: Continue to exclude, from *S_{A}*, time frequency resources that meet the following conditions: Decoding of received first-stage SCI succeeds, a result of RSRP measurement performed on a demodulation reference signal (demodulation reference signal, DMRS) on a physical sidelink shared channel (physical sidelink shared channel, PSSCH for short) corresponding to a time frequency resource reserved by the received first-stage SCI is greater than the RSRP threshold determined in step 3, and the time frequency resource reserved by the received first-stage SCI is in the resource selection window.
Step 7: If a quantity of remaining resources in *S_{A}* is less than X% of the total resources in the resource selection window, where a value of X% is configured by a resource pool, increase the RSRP threshold determined in step 3 (for example, increase the RSRP threshold by 3 each time) until a quantity of remaining resources in *S_{A}* is not less than X% of the total resources in the resource selection window.

For example, time frequency resources (r₀, r₁, r₂, ...) are randomly selected from *S_{A}* for sending data, resource re-assessment is performed on (r₀, r₁, r₂, ...) before data sending, and after re-assessment, preemption detection is performed on resources (r₀', r₁', r₂', ...) selected from *S_{A}*. The resources (r₀', r₁', r₂', ...) are logical slots.

A user performs resource re-assessment and preemption detection at least in a slot m-T₃ (T₃=T_{(proc,1)}^{SL}), and UE may trigger resource re-assessment and/or preemption detection before and after the slot m-T₃ based on an implementation. Whether (r₀, r₁, r₂, ...) and (r₀', r₁', r₂', ...) need to be excluded is determined based on steps 1 to 7.

If rᵢ and/or rᵢ' in (r₀, r₁, r₂, ...) and (r₀', r₁', r₂', ...) do/does not belong to *S_{A}* (that is, rᵢ and rᵢ' are excluded during re-assessment and/or preemption detection respectively), rᵢ and/or rᵢ' are/is reselected. A slot m is a next slot in which sending is performed, that is, the slot m belongs to (r₀, r₁, r₂, ...) and (r₀', r₁', r₂', ...).

6. Channel busy ratio (channel busy ratio, CBR): A channel busy ratio indicates a ratio of a quantity of channels whose sidelink-received signal strength indicators (sidelink-received signal strength indicators, S-RSSI) exceed a preconfigured critical value to a total quantity of channels in a preset measurement period (for example, 100 slots or 100*2^µ slots). The CBR is an indicator for measuring an interference degree. A larger CBR indicates a higher busy degree of a channel, higher system load, and stronger interference between different terminal apparatuses. If an S-RSSI of a channel is greater than the preconfigured critical value, it indicates that the channel is occupied. If an S-RSSI of a channel is less than or equal to the preconfigured critical value, it indicates that the channel is not occupied. CBRs obtained in different CBR measurement manners may represent busy degrees of different types of channels. For example, in a preset measurement period of 100 slots (or 100*2^µ slots), if a terminal apparatus performs CBR measurement on three types of channels: a physical sidelink feedback channel (physical sidelink feedback channel, PSFCH), a PSSCH, and a physical sidelink control channel (physical sidelink control channel, PSCCH), an obtained CBR represents a channel busy degree of the PSFCH, the PSSCH, and the PSCCH in the preset measurement period. If the terminal apparatus performs CBR measurement on the PSFCH, an obtained CBR indicates a busy degree of one type of channel, that is, the PSFCH, in the preset measurement period. If the terminal apparatus performs CBR measurement on two types of channels: the PSSCH and the PSCCH, an obtained CBR indicates a channel busy degree of the PSSCH and the PSCCH in the preset measurement period. For a detailed procedure in which a terminal apparatus performs CBR measurement on different channels to obtain a CBR, refer to a related technology. Details are not described herein. In embodiments of this application, µ represents a sequence number of a subcarrier spacing.

7. LBT: An LBT mechanism is a channel access rule. Before accessing a channel (starting to send data), UE needs to sense whether the channel is idle (idle). If the channel has been idle for a period of time, the UE may occupy the channel. If the channel is not idle, the UE may occupy the channel only after the channel is restored to idle again.

Generally, a channel state may be determined by using energy-based detection and signal type-based detection. For example, NR-U uses energy-based detection, and Wi-Fi uses a combination of the two detection methods. A detection threshold (energy detection threshold) needs to be set for energy-based detection. When detected energy exceeds the detection threshold, it is determined that a channel is busy, and access to the channel is not allowed. When detected energy has been lower than the detection threshold for a period of time, access to a channel is allowed. According to national and regional regulations on use of unlicensed spectrums, when a 20 MHz channel is accessed on, for example, a 5 GHz frequency band, the 20 MHz channel can be occupied only when a requirement of occupying at least a minimum occupied channel bandwidth (occupied channel bandwidth, OCB) is met. Generally, the minimum OCB is at least 80% of a normal bandwidth. For example, when the normal bandwidth is 20 MHz, the UE needs to occupy at least 16 MHz bandwidth to preempt the 20 MHz channel.

There are a plurality of types of LBT. The following describes two types of LBT.

First-type LBT: A communication device can access a channel and send data only after performing random backoff (backoff). For example, user equipment may sense, for the first time in a period of defer sensing (defer sensing) time (denoted as T_{d}), that a channel is idle, and initiate data transmission after progressively decreasing a counter N to zero in sensing slot duration (sensing slot duration). T_{d} is followed by mₚ pieces of continuous sensing slot duration (denoted as *Tₛₗ*). Specifically, the user equipment may access the channel based on the following steps.

Step 1: Set N=Nᵢₙᵢₜ, where Nᵢₙᵢₜ is a random number evenly distributed between 0 and CWₚ, and perform step 2, where CWₚ is a contention window (contention window for a given priority class) for a channel access priority p.

Step 2: If N>0, a network device or a terminal device selects to progressively decrease the counter, and sets N=N-1.

Step 3: If the channel during a sensing slot is idle, perform step 4.

Otherwise, if the channel during the sensing slot is not idle, perform step 5.

Step 4: If N=0, stop.

Otherwise (i.e., if N≠0), perform the step 2.

Step 5: Sense the channel until it is sensed that the channel is busy within another duration range of T_{d}, or until it is sensed that the channel is idle in all sensing slots within the another duration range of T_{d}.

Step 6: If it is detected that the channel is idle in all the sensing slots within the another duration range of T_{d}, perform the step 4.

Otherwise, if it is detected that the channel is not idle in all the sensing slots within the another duration range of T_{d}, perform the step 5.

CW_{min,p}≤CWₚ≤CW_{max,p}, where CW_{min,p} is a minimum value of the contention window for the channel access priority p, and CW_{max,p} is a maximum value of the contention window for the channel access priority p.

CW_{min,p} and CW_{max,p} are selected before the foregoing step 1, and mₚ, CW_{min,p}, and CW_{max,p} are determined based on the channel access priority class p associated with transmission of the network device or the terminal device, as shown in Table 1:

**Table 1 Table of a relationship between a channel access priority and CWₚ**

| Channel access priority class p | mₚ | CW_{min,p} | CW_{max, p} | T_{m cot,p} | Allowed CWₚ size |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

In Table 1, T_{m cot,p} is maximum channel occupancy time (maximum channel occupancy time for a given priority class) for the channel access priority p, and channel occupancy time (channel occupancy time, COT) for which the network device or the terminal device performs transmission on the channel does not exceed T_{m cot,p}. In other words, COT is time for which a communication device is allowed to occupy the channel after successfully accessing the channel, or the communication device may preempt a right to use the channel in a period of time after completing an LBT process. A channel access process is performed based on the channel access priority class p associated with transmission of the network device or the terminal device. A smaller value of the priority class in Table 1 indicates a higher priority. For example, a priority 1 is a highest priority.

The network device or the terminal device maintains a value of the contention window CWₚ, and adjusts the value of CWₚ based on the following step before performing the step 1:
for each priority in the table, setting CWₚ=CW_{min,p} corresponding to the priority.

In a hybrid automatic repeat request acknowledgment (hybrid automatic repeat request acknowledgment, HARQ-ACK) HARQ-ACK value corresponding to data sent by the network device or the terminal device in a reference subframe k, if a negative acknowledgment (negative acknowledgment, NACK) is fed back for at least 80% of the data, a value of CWₚ corresponding to each priority is increased to a next higher allowed value, which is used in step 2. Otherwise, the step 1 is performed. The reference subframe k is a start subframe for latest data transmission of the network device or the terminal device on the channel.

As shown in FIG. 3, that N is 6 is used as an example. The user equipment determines, through sensing, that the channel is always in an idle state within a duration range of first T_{d}, progressively decreases N from 6 to 5 in first Tₛₗ, and progressively decreases N from 5 to 4 in second Tₛₗ. Then, the user equipment senses that the channel state is busy, and after waiting for duration in which the channel state is idle and that lasts for T_{d}, progressively decreases N to 3 in third Tₛₗ. After the user equipment senses that the channel is busy again, and waits again for duration in which the channel state is idle and that lasts for T_{d}, the user equipment progressively decreases N to 2 in fourth Tₛₗ, progressively decreases N to 1 in fifth Tₛₗ, and progressively decreases N to 0 in sixth Tₛₗ. The user equipment accesses the channel, and transmits data in the COT.

Second-type LBT is LBT without random backoff, and there are two cases of the second-type of LBT.

Case A: After sensing that a channel is in an idle state and the idle state lasts for a period of time, a communication device may send data without performing random backoff.

Case B: Sending is performed immediately after a short switching gap (switching gap). For example, a communication device performs sending immediately after the switching gap in which the communication device switches from a receiving state to a sending state in the COT, and time of the switching gap is not greater than 16 µs.

As shown in FIG. 4, UE senses a channel, determines that the channel is in an idle state within a gap (gap), and may access the channel at an end moment of the gap.

A time domain resource used by the UE to perform an LBT process includes one or more sensing time units. For example, one sensing time unit is 9 µs. The UE may sense the channel in the sensing time unit, and perform random backoff at the same time. It should be noted that a length of the sensing time unit is different from a length of a time unit of a time domain resource used by the UE to send data. For example, in an example in which a slot is a time unit included in the time domain resource used by the UE to send the data, a length of the time unit may be as follows: When a subcarrier spacing is 15 kHz, the length of the time unit is 1 ms; when a subcarrier spacing is 30 kHz, the length of the time unit is 0.5 ms; or the like.

In an unlicensed SL system, user equipment autonomously contends for a transmission resource based on LBT, and UE that urgently needs to send data may fail to obtain the transmission resource through contention. For example, a data priority of UE 1 is higher, but the transmission resource may be preempted by other UE. For example, according to an LBT rule, a random backoff process of the UE 1 is not completed, but a random backoff process of the other UE is completed before the UE 1. In this case, the other UE may first access a channel, the UE 1 cannot access the channel, and the UE 1 attempts to access the channel again based on LBT only after data transmission of the another UE is complete. This cannot meet quality of service (quality of service, QoS) requirements of different services of an SL on an unlicensed spectrum. For example, a delay requirement of to-be-sent data of the UE 1 is strict, but the UE 1 cannot obtain a resource through contention. As a result, the data cannot be sent in time, and user experience is severely affected.

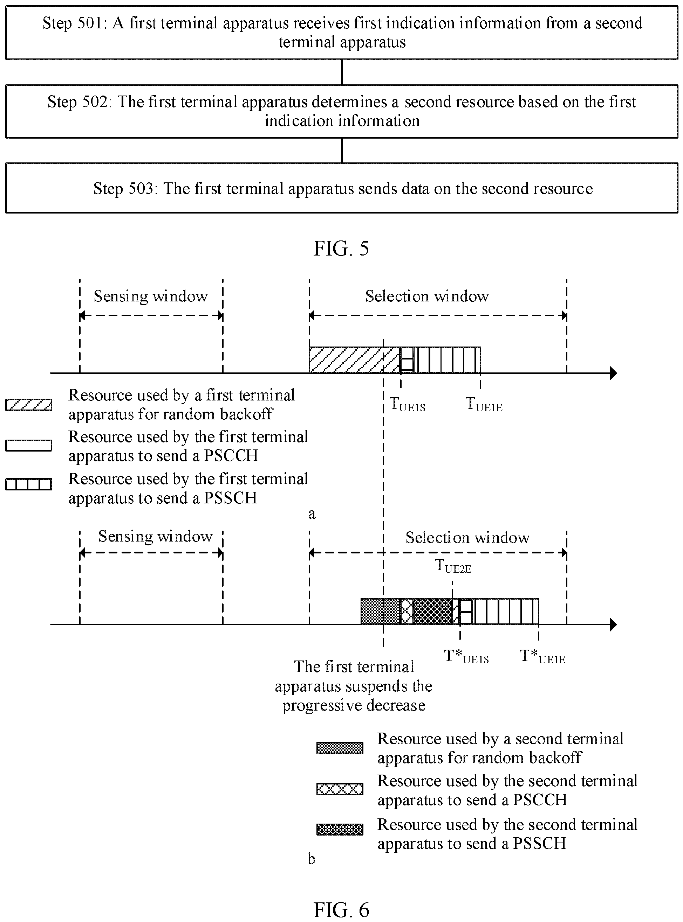

To resolve the foregoing problem, an embodiment of this application provides a communication method. According to the method, data can be sent in time, to meet a service requirement. As shown in FIG. 5, the method may include the following steps.

Step 501: A first terminal apparatus receives first indication information from a second terminal apparatus.

The first indication information indicates a first resource, and the first resource is a resource reserved by the second terminal apparatus for sending first data. The first resource corresponds to first COT in time domain. The first resource may also be referred to as a resource reserved by the second terminal apparatus or reserved COT.

The first indication information may be carried in at least one of first-stage sidelink control information SCI, second-stage SCI, a sidelink media access control control element (sidelink media access control control element, SL-MAC CE), or PC5 interface radio resource control (PC5 radio resource control, PC5-RRC) signaling. For example, the first indication information may be carried in only one piece of the foregoing signaling. Alternatively, the first indication information may be carried in a plurality of pieces of the foregoing signaling. For example, complete content of the first indication information may be carried in the SL-MAC CE, and may be also carried in the PC5-RRC signaling. Alternatively, content of the first indication information may be jointly indicated by using a plurality of pieces of signaling. For example, a part of content of the first indication information is carried in the first-stage SCI, and another part of the content is carried in the PC5-RRC signaling. This is not limited in embodiments of this application.

It should be understood that the first indication information may alternatively be carried in signaling configured by another network or preconfigured signaling. For example, a periodic resource reservation indication (resource reservation period) field indicates a resource that is periodically reserved for data transmission, and a value of the periodic resource reservation indication field may be configured by a network device, preconfigured, or predefined. For example, the network device may indicate a periodic resource through RRC signaling, and the RRC signaling includes period information (sl-ResourceReservePeriod1). This is not limited in this embodiment of this application.

For example, the first indication information is carried in the first-stage SCI. In this case, a frequency domain resource assignment (frequency domain resource assignment) field and a time domain resource assignment (time domain resource assignment) field in the first-stage SCI respectively indicate a frequency domain resource and a time domain resource used by the first terminal apparatus to transmit data. After decoding the first-stage SCI, the second terminal apparatus may determine the first resource.

The first indication information may indicate an LBT time frequency start location of the second terminal apparatus. The LBT time frequency start location may be understood as a start location of a time frequency resource used by the second terminal apparatus to perform an LBT process. Alternatively, the first indication information may indicate a time frequency start location of COT reserved by the second terminal apparatus.

When the first indication information indicates the LBT time frequency start location of the second terminal apparatus, the second terminal apparatus further needs to indicate an LBT parameter to the first terminal apparatus, and the first terminal apparatus determines the first resource based on the LBT parameter. It should be understood that the LBT parameter is an LBT parameter of the second terminal apparatus. The LBT parameter of the second terminal apparatus may include an LBT counter, for example, a total quantity Nᵢₙᵢₜ of backoff times and a current value N of the counter. The LBT parameter may further include an LBT channel access priority p.

The LBT parameter may be carried in the second-stage SCI, for example, may be carried in SCI format 2-D. A second-stage SCI format may be indicated by using the first-stage SCI, and possible second-stage SCI format fields are shown in Table 2.

**Table 2 Second-stage SCI format field**

| Value of second-stage SCI (Value of 2nd-stage SCI format field) | Second-stage SCI format (2nd-stage SCI format) |
|---|---|
| 00 | SCI format 2-A |
| 01 | SCI format 2-B |
| 10 | SCI format 2-C |
| 11 | SCI format 2-D |

It should be understood that Table 2 is merely used as an example instead of a limitation. Some content in Table 2 may be used for implementation, all content in Table 2 may be used for implementation, or Table 2 may be used as a part of other content for implementation. This is not limited in this embodiment of this application.

Optionally, the second terminal apparatus may send indication information (that is, third indication information) to the first terminal apparatus, where the indication information indicates that the first terminal apparatus is a destination end to which the second terminal apparatus sends data. For example, the indication information may include identities (identity document, ID) of a source end and a destination end of to-be-sent data, where an ID of the source end (source ID) is an ID of the second terminal apparatus, and an ID of the destination end (destination ID) is an ID of the first terminal apparatus. Alternatively, the indication information may include the ID of the second terminal apparatus. Alternatively, the indication information may include the ID of the second terminal apparatus and the ID of the first terminal apparatus. After receiving the indication information, the first terminal apparatus may determine that the first terminal apparatus and the second terminal apparatus are both parties of data transmission.

Alternatively, the indication information may include a temporary user group identity (temporary UE group ID, group ID for short below), and the temporary user group is a group predefined by the network device. For example, the network device groups UE 1 and UE 2 into a same group. Alternatively, the indication information may include a cell ID, where the cell may be a cell that is in a geographical sense and in which the UE 1 and the UE 2 coexist, the cell may be a cell obtained through division based on a scheduling range of the network device, or the cell may be a cell predefined by the network device. The first terminal apparatus further needs to receive indication information of same content from the network device. For example, the first terminal apparatus receives a group ID from the network device, and then receives a same group ID from the second terminal apparatus, so that the first terminal apparatus may determine that the first terminal apparatus and the second terminal apparatus have a same group ID. The network device may predefine that IDs included in the temporary group are IDs of both parties of data transmission. In this case, the first terminal apparatus may determine that the first terminal apparatus and the second terminal apparatus are both parties of data transmission.

Alternatively, the network device may preconfigure a correspondence between the first terminal apparatus and the second terminal apparatus. For example, the network device may preconfigure, in the first terminal apparatus, a table of correspondences between potential interaction peer ends of the first terminal apparatus and the first terminal apparatus. When receiving an ID sent by the second terminal apparatus, the first terminal apparatus may determine that the second terminal apparatus is a peer end interacting with the first terminal apparatus.

The third indication information may be carried in at least one of the first-stage SCI, the second-stage SCI, the SL-MAC CE, or the PC5-RRC signaling. It should be understood that the foregoing manner of indicating both parties of data transmission is merely an example rather than a limitation. For a manner of carrying the third indication information, refer to related descriptions of the first indication information. Details are not described again.

The second terminal apparatus further needs to send data priority indication information (that is, fourth indication information) to the first terminal apparatus, to indicate a priority of to-be-sent data of the second terminal apparatus. The priority indication information may be carried in at least one of the first-stage SCI, the second-stage SCI, the SL-MAC CE, or the PC5-RRC signaling. For a manner of carrying the fourth indication information, refer to related descriptions of the first indication information. Details are not described again.

It should be understood that the first indication information and the fourth indication information may be sent in a broadcast manner, may be sent in a multicast manner, or may be sent in a unicast manner. This is not limited in this embodiment of this application.

Step 502: The first terminal apparatus determines a second resource based on the first indication information.

The first terminal apparatus may determine the second resource based on the first resource indicated by the first indication information. For example, the first terminal apparatus determines the second resource based on a time domain location of the first resource. Specifically, if the first terminal apparatus determines a part of a resource, and a time domain location of the resource is after the time domain location of the first resource and does not overlap the time domain location of the first resource, the part of the resource may be the second resource.

Optionally, the first terminal apparatus may further sense, in a first sensing time unit, that a state of a first channel is idle, and suspend a listen-before-talk process in the first sensing time unit based on the first resource, where the first sensing time unit is earlier than a start time unit of the first resource.

That the first terminal apparatus suspends the listen-before-talk process in the first sensing time unit based on the first resource may be understood as that after determining the first resource, the first terminal apparatus suspends the listen-before-talk process in the first sensing time unit based on the time domain location of the first resource.

For example, when the first terminal apparatus receives an LBT time frequency start location and LBT parameter information, the first terminal apparatus needs to determine a time frequency location of the first resource based on the LBT time frequency start location and the LBT parameter information. For example, the first terminal apparatus calculates, based on the total quantity Nᵢₙᵢₜ of LBT backoff times and the current value N of the counter, duration required for a value of the counter in the second terminal apparatus to be progressively decreased from N to 0. Then, the first terminal apparatus determines an LBT time frequency end location based on the LBT time frequency start location and the duration, where the LBT time frequency end location is a start location (start time unit) of the first resource.

That the first terminal apparatus suspends the listen-before-talk process may be understood as that the first terminal apparatus stops or temporarily stops a process of accessing a channel. In other words, the first terminal apparatus does not access the channel within a time domain range corresponding to the first resource, or the first terminal apparatus may stop progressively decreasing a value of the counter, for example, after progressively decreasing the value of the counter from Q to M, the first terminal apparatus suspends the progressive decrease, where 1≤M≤Q, and Q is an initial value of the counter.

Before suspending the listen-before-talk process, the first terminal apparatus further needs to determine at least one of the following content.
A. A priority of to-be-sent data of the second terminal apparatus is higher than a priority of to-be-sent data of the first terminal apparatus.
   The first terminal apparatus may determine a priority relationship based on the fourth indication information in step 501 and a data priority of the first terminal apparatus.
B. RSRP of a reference signal sent by the second terminal apparatus is greater than an RSRP threshold determined by the first terminal apparatus.

According to the LBT rule, after preempting a channel, the first terminal apparatus enables UEs within a specific RSRP threshold range to be silent based on strength of a signal sent by the first terminal apparatus. These UEs cannot complete an LBT backoff process because the UEs detect that the channel is busy. If RSRP of UE is low, it indicates that a distance between the UE and the first terminal apparatus is long. After the first terminal apparatus shares a resource with the second terminal apparatus, the second terminal apparatus cannot enable another device near the first terminal apparatus to be silent due to low RSRP of the second terminal apparatus. As a result, the channel may be occupied by the another device. Therefore, when the RSRP of the reference signal sent by the second terminal apparatus is greater than the RSRP threshold determined by the first terminal apparatus, data can be normally sent.

The second terminal apparatus may send the reference signal to the first terminal apparatus. For example, the reference signal may be carried in the first-stage SCI, and the reference signal may be a PSCCH DMRS. Alternatively, the reference signal may be a reference signal on a PSSCH, for example, a PSSCH DMRS. The first terminal apparatus obtains received power of the reference signal by measuring the first-stage SCI. For determining of the RSRP threshold, refer to related descriptions in the SL mode 2. Details are not described again.

C. The start time unit of the first resource is later than a start time unit of a resource to be preempted by the first terminal apparatus.

The resource to be preempted by the first terminal apparatus may be understood as a time frequency resource to be occupied by the first terminal apparatus after the first terminal apparatus completes backoff based on a current LBT process. As shown in (a) in FIG. 6, the resource to be preempted by the first terminal apparatus is a time frequency resource between T_{UE1S} and T_{UE1E}.

D. Duration between the start time unit of the first resource and a 1^{st} sensing time unit in which a value of the counter is M is less than or equal to a first threshold, where 1≤M≤N, and N is a value of the counter when the progressive decrease is suspended.

The first threshold may be greater than 0, and is less than a delay required by the to-be-sent data of the first terminal apparatus. In other words, there is an upper limit on duration for which the first terminal apparatus stops progressively decreasing the counter. That is, the first terminal apparatus determines that if the duration for which the progressive decrease is suspended is less than or equal to the upper limit, the progressive decrease is suspended, and the value of the counter when the progressive decrease is suspended does not need to be considered. In other words, a moment at which the first terminal apparatus determines to suspend the progressive decrease may be any moment at which the value of the counter is greater than 0 and at which the upper limit is met. The first threshold may be a value configured by the network device, a preconfigured value, or a fixed value predefined in a standard protocol. This is not limited in this embodiment of this application.

That the first terminal apparatus stops progressively decreasing the counter may be understood as that the first terminal apparatus stops progressively decreasing the counter from a moment, and the value of the counter remains the value of the counter before the progressive decrease. In addition, a minimum value of the counter is limited to 1. According to the LBT rule, it means that the first terminal apparatus cannot access a channel to send data.

The 1^{st} sensing time unit in which a value of the counter is M is a sensing time unit (that is, the first sensing time unit) in which a moment at which the decrease starts is located. For example, the progressive decrease is suspended in a sensing time unit 1, and the value of the counter is 2 in this case. Before the start unit of the first resource, a sensing time unit 2 and a sensing time unit 3 are further included, and the value of the counter in the sensing time unit 2 and the value of the counter in the sensing time unit 3 are always 2. In this case, a 1^{st} sensing time unit in which the value of the counter is 2 is the sensing time unit 1. It should be understood that the foregoing values and indexes are merely examples rather than limitations.

It should be understood that the first terminal apparatus further needs to successfully decode the first-stage SCI.

Optionally, the first terminal apparatus may further determine, based on the third indication information, that the second terminal apparatus is a destination end to which the first terminal apparatus sends information (data).

Optionally, the first terminal apparatus may further determine a CBR of the first channel. When the CBR is less than or equal to a third threshold, the first terminal apparatus may suspend an LBT process. The CBR represents a busy degree of the first channel in first preset duration. For example, the first preset duration may be a preset measurement period, for example, 100 slots, 100 pieces of *Tₛₗ,* or 100 pieces of *T*_{d} (or 100*2^{µ} slots/*Tₛₗ*/T*_{d}*).

Alternatively, the first terminal apparatus may determine, in the preset measurement period, for example, 100 pieces of *Tₛₗ* (*T*_{d}) or 100*2^{µ} pieces of *Tₛₗ* (*T_{d}*), a proportion of an amount of *Tₛₗ* (*T*_{d}) whose energy detection result is greater than an energy detection threshold to a total amount of *Tₛₗ* (*T*_{d}), where the energy detection threshold may be X_{Thresh}. If an energy detection result of a channel or *Tₛₗ* (*T*_{d}) is greater than the energy detection threshold, it indicates that the channel or *Tₛₗ* (*T*_{d}) is occupied. If an energy detection result of a channel is less than or equal to the energy detection threshold, it indicates that the channel or *Tₛₗ* (*T*_{d}) is not occupied. When the proportion is less than or equal to the third threshold, the first terminal apparatus may suspend the LBT process.

The third threshold may be predefined. For example, the third threshold may be 20%. This is not limited in this embodiment of this application. It should be understood that, in time domain, the first preset duration or the preset measurement period is before a slot in which a moment at which the first terminal apparatus suspends the LBT process is located.

Optionally, the first terminal apparatus may further perform re-assessment or preemption detection on a resource. For example, after a sensing window, the first terminal apparatus may perform re-assessment or preemption detection on a time domain resource before the second terminal apparatus accesses the channel. For example, the first terminal apparatus determines that rᵢ and/or rᵢ' in (r₀, r₁, r₂, ...) and (r₀', r₁', r₂', ...) do/does not belong to *S_{A}* (that is, rᵢ and rᵢ' are excluded during re-assessment and/or preemption detection respectively). In this case, it may be determined that rᵢ and/or rᵢ' may be used by the second terminal apparatus to send data. Before performing re-assessment or preemption detection, the first terminal apparatus may determine the sensing window, a selection window, and a reference signal received power threshold, and initialize an available resource set. For details, refer to descriptions of steps 1 to 4 in the SL mode 2. Details are not described again.

The foregoing channel may be understood as a bandwidth. For example, in an unlicensed SL communication system, there are a plurality of access channels with a 20 MHz bandwidth, UE may separately perform LBT access on each 20 MHz channel, and access processes of the channels are independent of each other. After completing LBT, the UE occupies a corresponding 20 MHz bandwidth. It should be understood that 20 MHz is merely an example of a channel rather than a limitation in this embodiment of this application. For example, a channel in this embodiment of this application may alternatively be another bandwidth such as 30 MHz, 40 MHz, or 45 MHz.

Step 503: The first terminal apparatus sends data on the second resource.

A start time unit of the second resource is later than an end time unit of the first resource. As shown in (b) in FIG. 6, T*_{UE1S} is after T_{UE2E}. That is, the first terminal apparatus accesses the channel to send data after data sending of the second terminal apparatus ends. It may be understood that the first terminal apparatus defers (defer) channel access, or spares, through avoidance, a resource reserved by the second terminal apparatus.

The first threshold in step 502 may be determined based on duration of the second resource. For example, the first threshold may be 1/10, 1/8, or the like of the duration of the second resource.

A possible implementation in which the first terminal apparatus accesses the second resource is as follows: The first terminal apparatus determines, in a second sensing time unit, that a state of the channel is idle, and continues to progressively decrease the counter, where the second sensing time unit is later than the end time unit of the first resource; and the first terminal apparatus progressively decreases the counter to 0 in a start time unit of the second resource, and accesses the channel to send data.

Continuing to progressively decrease the counter means that the value of the counter when this time of progressive decrease starts is the value of the counter when the progressive decrease is suspended in step 502. For example, in step 502, the value of the counter is 2 when the progressive decrease is suspended, and the value of the counter is progressively decreased from 2 to 0 this time. It should be understood that the value is merely an example rather than a limitation. According to the LBT rule, that the counter is progressively decreased to 0 means that the first terminal apparatus accesses the channel to send the data.

Alternatively, the first terminal apparatus may determine that the channel is in an idle state in a time period, and the first terminal apparatus accesses the channel. Duration of the time period may be 16 µs or the like. For details, refer to descriptions of the second-type listen-before-talk. Details are not described again.

Optionally, the first terminal apparatus may further perform sensing in the start time unit of the first resource, to determine whether the second terminal apparatus successfully accesses the channel. If the second terminal apparatus successfully accesses the channel, the first terminal apparatus accesses the channel in a manner in step 503 to send data. Otherwise, the first terminal apparatus directly continues the LBT process, and accesses the channel after completing the LBT process.

It should be understood that sending, by the first terminal apparatus, data on the first channel may be understood as an example of sidelink transmission performed by the first terminal apparatus on the first channel. The first terminal apparatus may further send or receive sidelink control information and/or feedback information and the like on the first channel.

In the method, a device that may preempt a resource performs avoidance in time domain, so that a device with a higher data priority can send data on a reserved resource in time. This meets a service requirement, and significantly improves user experience.

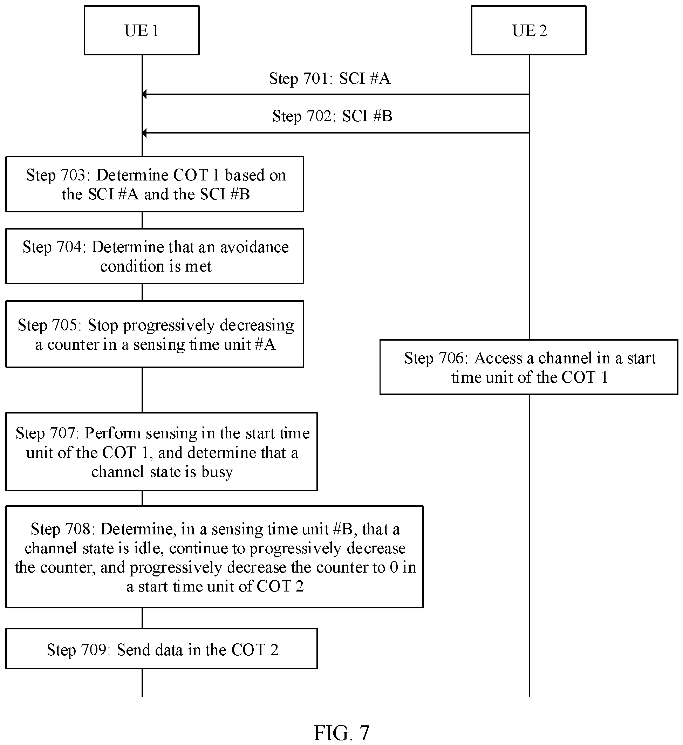

An embodiment of this application provides a communication method. As shown in FIG. 7, that first indication information and fourth indication information are carried in first-stage SCI is used as an example, UE 1 is an example of a first terminal apparatus, UE 2 is an example of a second terminal apparatus, COT 1 is an example of a first resource, COT 2 is an example of a second resource, SCI #A is an example of the first-stage SCI, and SCI #B is an example of second-stage SCI. The method may include the following steps.

Step 701: The UE 2 sends the SCI #A to the UE 1, and correspondingly, the UE 1 receives the SCI #A.

The SCI #A is carried on a PSCCH. The SCI #A includes resource indication information, data priority information, a reference signal, and a format of the SCI #B. Specifically, refer to related descriptions of the first indication information and the fourth indication information in step 501. Details are not described again.

Step 702: The UE 2 sends the SCI #B to the UE 1, and correspondingly, the UE 1 receives the SCI #B.

The SCI #B is carried on a PSSCH. The SCI #B includes an LBT parameter of the UE 2.

Step 703: The UE 1 determines the COT 1 based on the SCI #A and the SCI #B.

Step 704: The UE 1 determines that an avoidance condition is met.

For the avoidance condition, refer to related descriptions of A, B, C, and D in step 502. Details are not described again.

Optionally, the UE 1 may perform resource re-assessment or preemption detection. For details, refer to descriptions in step 502. Details are not described again.

Step 705: The UE 1 stops progressively decreasing a counter in a sensing time unit #A.

For example, when the progressive decrease is suspended, a value of the counter is 3. For the step 703, refer to related descriptions in step 502. Details are not described again.

Step 706: The UE 2 accesses a channel in a start time unit of the COT 1.

Step 707: The UE 1 performs sensing in the start time unit of the COT 1, and determines that a channel state is busy.

Step 708: The UE 1 determines, in the sensing time unit #B, that a channel state is idle, continues to progressively decrease the counter, and progressively decreases the counter to 0 in a start time unit of the COT 2.

For example, the UE 1 progressively decreases the counter from 3. For the step 707, refer to related descriptions in step 503. Details are not described again.

Step 709: The UE 1 sends data in the COT 2.

It should be understood that, before the step 701, the UE 1 may determine a sensing window and a selection window, to select a resource. Details are not described herein. For specific steps, refer to the foregoing descriptions of steps 1 to 7 in the mode 2 (SL mode 2).

In the method, when the avoidance condition is met, the UE 1 suspends an LBT backoff process, does not access the channel, waits for the UE 2 to access the channel to send data, and accesses the channel to send data after data sending of the UE 2 ends. In this way, the data of the UE 2 can be sent in time. This meets a service requirement.

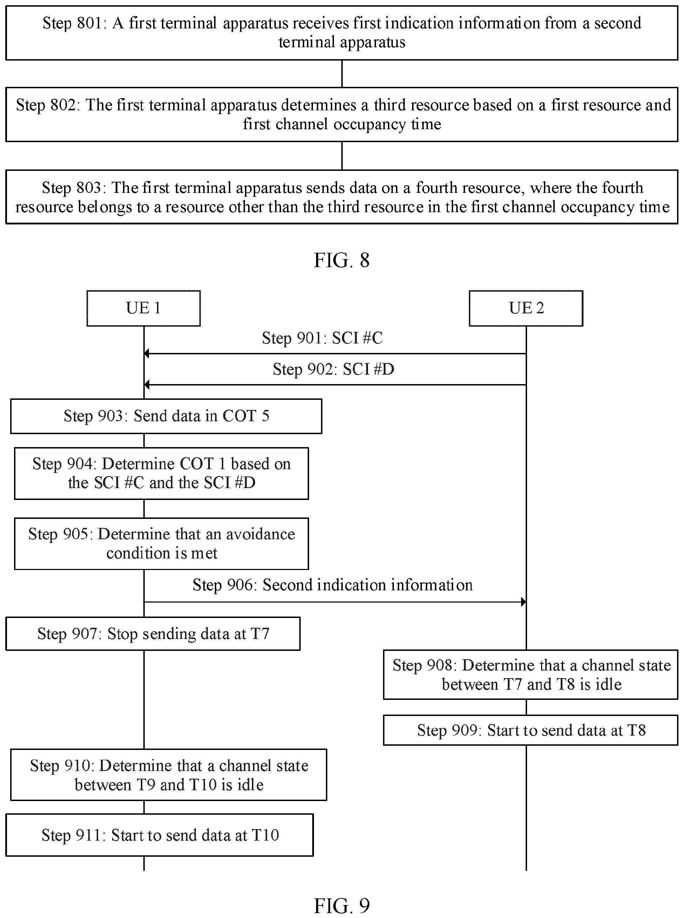

In the foregoing method, a device that may preempt a resource performs avoidance, so that data with a higher priority can be sent in time. An embodiment of this application provides another communication method. A device that has preempted a resource shares the resource with a device that is to send data, so that the data can be normally sent. The following describes the method in detail. As shown in FIG. 8, the method may include the following steps.

Step 801: A first terminal apparatus receives first indication information from a second terminal apparatus.

The first indication information indicates a first resource, and the first resource is a resource reserved by the second terminal apparatus for sending first data. For the first indication information, refer to descriptions of the first indication information and the first resource in step 501. Details are not described herein again.

Relationships between the first terminal apparatus and the second terminal apparatus may be divided into two cases.

Case 1: The first terminal apparatus is a destination end to which the second terminal apparatus sends data.

In this case, the second terminal apparatus needs to send indication information (that is, third indication information) to the first terminal apparatus, where the indication information indicates that the first terminal apparatus is the destination end to which the second terminal apparatus sends the data. For example, the indication information may include identities (identity document, ID) of a source end and a destination end of to-be-sent data, where an ID of the source end (source ID) is an ID of the second terminal apparatus, and an ID of the destination end (destination ID) is an ID of the first terminal apparatus. Alternatively, the indication information may include the ID of the second terminal apparatus. Alternatively, the indication information may include the ID of the second terminal apparatus and the ID of the first terminal apparatus. After receiving the indication information, the first terminal apparatus may determine that the first terminal apparatus and the second terminal apparatus are both parties of data transmission.

Alternatively, the indication information may include a temporary user group identity (temporary UE group ID, group ID for short below), and the temporary user group is a group predefined by a network device. For example, the network device groups UE 1 and UE 2 into a same group. Alternatively, the indication information may include a cell ID, where the cell may be a cell that is in a geographical sense and in which the UE 1 and the UE 2 coexist, the cell may be a cell obtained through division based on a scheduling range of the network device, or the cell may be a cell predefined by the network device. The first terminal apparatus further needs to receive indication information of same content from the network device. For example, the first terminal apparatus receives a group ID from the network device, and then receives a same group ID from the second terminal apparatus, so that the first terminal apparatus may determine that the first terminal apparatus and the second terminal apparatus have a same group ID. The network device may predefine that IDs included in the temporary group are IDs of both parties of data transmission. In this case, the first terminal apparatus may determine that the first terminal apparatus and the second terminal apparatus are both parties of data transmission.

Alternatively, the network device may preconfigure a correspondence between the first terminal apparatus and the second terminal apparatus. For example, the network device may preconfigure, in the first terminal apparatus, a table of correspondences between potential interaction peer ends of the first terminal apparatus and the first terminal apparatus. When receiving an ID sent by the second terminal apparatus, the first terminal apparatus may determine that the second terminal apparatus is a peer end interacting with the first terminal apparatus.

The third indication information may be carried in at least one of first-stage SCI, second-stage SCI, an SL-MAC CE, or PC5-RRC signaling. For the second-stage SCI, refer to related descriptions in step 501. It should be understood that the foregoing manner of indicating both parties of data transmission is merely an example rather than a limitation.

Case 2: The first terminal apparatus and the second terminal apparatus are not both parties of data transmission.

In this case, the first terminal apparatus does not need to determine whether the second terminal apparatus is a peer end of data transmission. Optionally, the first terminal apparatus may receive data priority indication information (that is, fourth indication information) from the second terminal apparatus, and the first terminal apparatus determines that a priority of data sent by the second terminal apparatus is higher than or equal to a priority of data sent by the first terminal apparatus. Specifically, for the fourth indication information, refer to related descriptions in step 501. Details are not described again.

Optionally, the first terminal apparatus further receives a reference signal from the second terminal apparatus, and the first terminal apparatus determines that power for receiving the reference signal is greater than or equal to a reference signal received power threshold. Specifically, refer to related descriptions of the content B in step 502. Details are not described again.

Step 802: The first terminal apparatus determines a third resource based on the first resource and first channel occupancy time.

The first channel occupancy time (COT) is a time domain resource corresponding to a fifth resource in time domain, and the fifth resource is a resource preempted by the first terminal apparatus. For example, if the first terminal apparatus accesses a channel (to send data) earlier than the second terminal apparatus, channel use duration in which the first terminal apparatus is allowed to occupy the channel is the first channel occupancy time. In the first COT, the first terminal apparatus may send data by using a time frequency resource (the fifth resource). In other words, the first terminal apparatus determines the third resource based on the first resource and the fifth resource.

The third resource is used by the second terminal apparatus to send data, and the third resource belongs to the first resource and the first channel occupancy time. Because a start moment (start time unit) of the first channel occupancy time is earlier than a start moment (start time unit) of the first resource, that the third resource belongs to the first resource and the first channel occupancy time may be understood as that the third resource belongs to an intersection or an overlap between the first resource and the first channel occupancy time. In other words, the third resource belongs to an overlap between the first resource and the fifth resource. It may be understood that the third resource may be the overlap between the first resource and the first channel occupancy time, that is, a resource corresponding to the third resource in time domain is an intersection between a resource corresponding to the first resource in time domain and the first channel occupancy time. Alternatively, the third resource may be a part of the overlap between the first resource and the first channel occupancy time, that is, a resource corresponding to the third resource in time domain falls within a range of an intersection between a resource corresponding to the first resource in time domain and the first channel occupancy time.

Optionally, after determining the third resource, the first terminal apparatus sends second indication information to the second terminal apparatus, where the second indication information indicates the third resource. Further, the first terminal apparatus sends the second indication information to the second terminal apparatus in a first time period, where a start moment of the first time period falls within a range between a start time unit of a fourth resource and a start time unit of the third resource, and duration between the start moment of the first time period and the start time unit of the fourth resource is greater than or equal to a second threshold. For example, the second threshold may be T_{proc,0}, that is, the first terminal apparatus needs to indicate information about the third resource to the second terminal apparatus before the start time unit of the third resource.

That is, in the case 1 of the step 801, the first terminal apparatus needs to determine at least one of the following content.
E: The first terminal apparatus is a destination end to which the second terminal apparatus reserves a resource for transmission;
F: a start location of the first resource is after a start location of the fifth resource, and the first resource overlaps the fifth resource; and
G: the first terminal apparatus has sufficient time for sending the second indication information.

In the case 2 of the step 801, the first terminal apparatus needs to determine at least one of the following content.
H: A priority of to-be-sent data of the second terminal apparatus is higher than a priority of to-be-sent data of the first terminal apparatus;
I: a start location of the first resource is after a start location of the fifth resource, and the first resource overlaps the fifth resource;
J: the first terminal apparatus has sufficient time for sending the second indication information; and
K: RSRP of the first resource is greater than an RSRP threshold.

It should be understood that the first terminal apparatus further needs to successfully decode the first-stage SCI.

According to the LBT rule, after preempting a channel, the first terminal apparatus enables UEs within a specific RSRP threshold range to be silent based on strength of a signal sent by the first terminal apparatus. These UEs cannot complete an LBT backoff process because the UEs detect that the channel is busy. If RSRP of UE is low, it indicates that a distance between the UE and the first terminal apparatus is long. After the first terminal apparatus shares a resource with the second terminal apparatus, the second terminal apparatus cannot enable another device near the first terminal apparatus to be silent due to low RSRP of the second terminal apparatus. As a result, the channel may be occupied by the another device, the second terminal apparatus cannot send data, and the first terminal apparatus cannot re-access the channel. Therefore, when RSRP of a reference signal sent by the second terminal apparatus is greater than the RSRP threshold determined by the first terminal apparatus, data can be normally sent. Specifically, refer to the content B in step 502. Details are not described again.

Optionally, the first terminal apparatus may perform resource re-assessment or preemption detection. For details, refer to descriptions in step 502. Details are not described again.

The second indication information may be carried in at least one of the first-stage SCI, the second-stage SCI, the SL-MAC CE, or the PC5-RRC signaling. Specifically, for a manner of carrying the second indication information, refer to related descriptions of the first indication information. Details are not described again.

Step 803: The first terminal apparatus sends data on the fourth resource, where the fourth resource belongs to a resource other than the third resource in the first channel occupancy time.

It may be understood that the fourth resource belongs to a resource other than the third resource in the fifth resource, which means that the fourth resource may be all resources other than the third resource in the fifth resource, or the fourth resource may be a part of resources other than the third resource in the fifth resource.

It may be further understood that, that a start moment (start time unit) of the third resource is later than a start moment of the fifth resource means that the first terminal apparatus has sent a part of data on a resource before the third resource. After the second terminal apparatus completes data sending on the third resource, the first terminal apparatus re-accesses the channel, and sends data on a resource after the third resource. Before accessing a channel, the first terminal apparatus may sense the channel. For example, if it is determined that the channel is in an idle state in a time period, the first terminal apparatus may access the channel. For details, refer to descriptions of the second-type listen-before-talk. Details are not described again. Alternatively, the first terminal apparatus may access a channel in a time period based on the first-type listen-before-talk. This is not limited in this embodiment of this application.

In a possible implementation, that the fourth resource belongs to a resource other than the third resource in the first channel occupancy time may be understood as that the fourth resource is a frequency domain resource other than a frequency domain resource corresponding to the third resource in the first channel occupancy time, that is, the first terminal apparatus and the second terminal apparatus simultaneously send data on a time domain resource corresponding to the third resource, but frequency domain resources used by the first terminal apparatus and the second terminal apparatus to send data do not overlap.

In the method, a device that has preempted a resource shares the resource with a device with a higher data priority, or shares the resource with a device that is a transmit end for data transmission with the device that has preempted the resource, so that the device with the higher priority can send data in time. This meets a service requirement, and improves user experience.

An embodiment of this application provides a communication method. As shown in FIG. 9, an example in which first indication information, third indication information, and fourth indication information are carried in first-stage SCI is used, UE 1 is an example of a first terminal apparatus, UE 2 is an example of a second terminal apparatus, COT 1 is an example of a first resource, COT 3 is an example of a third resource, COT 4 is an example of a fourth resource, COT 5 is an example of a fifth resource, SCI #C is an example of the first-stage SCI, and SCI #D is an example of second-stage SCI. It should be understood that duration of one piece of COT includes duration for sending a PSCCH and duration for sending a PSSCH. The method may include the following steps.

Step 901: The UE 2 sends the SCI #C to the UE 1, and correspondingly, the UE 1 receives the SCI #C.

The SCI #C is carried on the PSCCH. The SCI #C is the first-stage SCI. The SCI #C includes resource indication information, a reference signal, and a format of the SCI #D. Specifically, for the resource indication information, refer to related descriptions of the first indication information in step 801. For the reference signal and the format of the SCI #D, refer to related descriptions in step 801. Details are not described again.

Optionally, when the UE 2 and the UE 1 are not both parties of this time of data transmission, the SCI #C may include a priority of to-be-sent data of the UE 2.

Step 902: The UE 2 sends the SCI #D to the UE 1, and correspondingly, the UE 1 receives the SCI #D.

The SCI #D is carried on the PSSCH. The SCI#D is the second-stage SCI. The SCI #D includes an LBT parameter of the UE 2.

When the UE 2 and the UE 1 are both parties of this time of data transmission, the SCI #D further includes an ID of the UE 2 and an ID of the UE 1. For these IDs, refer to descriptions of the third indication information in step 801. For the SCI #D, refer to descriptions of the second-stage SCI in step 501. Details are not described again.

When the UE 2 and the UE 1 are not both parties of this time of data transmission, the SCI #D may not include the ID of the UE 2 and the ID of the UE 1.

Optionally, the UE 1 may perform resource re-assessment or preemption detection. For example, the UE 1 may perform resource re-assessment or preemption detection from T₁ to T_{proc,1}^{SL}. For details, refer to descriptions in step 502. Details are not described again.

Step 903: The UE 1 sends data in the COT 5.

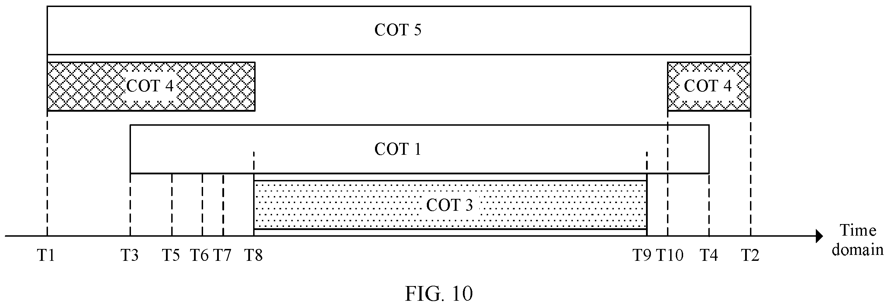

As shown in FIG. 10, the UE 1 accesses a channel (to send data) at T1. A resource between T1 and T2 in FIG. 10 is the fifth resource in step 802.

Step 904: The UE 1 determines the COT 1 based on the SCI #C and the SCI #D.

As shown in FIG. 10, the COT 1 is duration between T3 and T4. Specifically, for the COT 1, refer to descriptions of the first resource in step 802. Details are not described again. In other words, a resource between T3 and T4 is the first resource in step 801.

Step 905: The UE 1 determines that an avoidance condition is met.

When the UE 2 and the UE 1 are both parties of this time of data transmission, for the avoidance condition, refer to related descriptions of E, F, and G in step 802. When the UE 2 and the UE 1 are not both parties of this time of data transmission, for the avoidance condition, refer to related descriptions of H, I, J, and K in step 802. Details are not described again.

Step 906: The UE 1 sends second indication information to the UE 2.

As shown in FIG. 10, the UE 1 sends the second indication information to the UE 2 between T5 and T6. The second indication information indicates the COT 3. For example, the second indication information may include a start location T8 of the COT 3 and a length L of the COT. Alternatively, the second indication information may include a start location T8 of the COT 3 and an end location T9 of the COT 3.

Step 907: The UE 1 stops sending data at T7.

Step 908: The UE 2 determines that a channel state between T7 and T8 is idle.

Optionally, the UE 2 may determine, based on a second-type listen-before-talk mechanism, that the channel state between T7 and T8 is idle.

Step 909: The UE 2 starts to send data at T8.

As shown in FIG. 10, the UE 2 sends data between T8 and T9. In other words, a resource between T8 and T9 is the third resource in step 802.

Step 910: The UE 1 determines that a channel state between T9 and T10 is idle.

Optionally, the UE 1 may determine, based on the second-type listen-before-talk mechanism, that the channel state between T9 and T10 is idle.

Step 911: The UE 1 starts to send data at T10.

Optionally, as shown in FIG. 10, the UE 1 may end data sending at T2, that is, a resource between T1 and T7 and a resource between T10 and T2 are fourth resources in step 803.

It should be understood that, before the step 901, the UE 1 may determine a sensing window and a selection window, to select a resource (the COT 5). Details are not described herein. For specific steps, refer to the foregoing descriptions of steps 1 to 7 in the mode 2 (SL mode 2). It should be further understood that FIG. 10 is intended to describe a relationship in time domain, a plurality of pieces of COT in the figure are drawn separately only for clarity, and differentiation in frequency domain is not involved.

In the method, the UE 1 that has preempted a resource serves as a receive end of the UE 2, or when a data priority of the UE 2 is higher than a data priority of the UE 1, the UE 1 shares a part or all of the preempted resource with the UE 2, so that the UE 2 can send data in time. This meets a service requirement, and improves communication efficiency.

In the methods shown in FIG. 5 to FIG. 10, a resource preempted by the first terminal apparatus and a resource reserved by the second terminal apparatus are on a same channel. It may be understood that the resource preempted by the first terminal apparatus and the resource reserved by the second terminal apparatus may alternatively be on different channels; or some frequency domain resources in resources reserved by the second terminal apparatus are on a same channel as the resource preempted by the first terminal apparatus, and the other frequency domain resources reserved by the second terminal apparatus are on different channels from the resource preempted by the first terminal apparatus. This is not limited in this application.

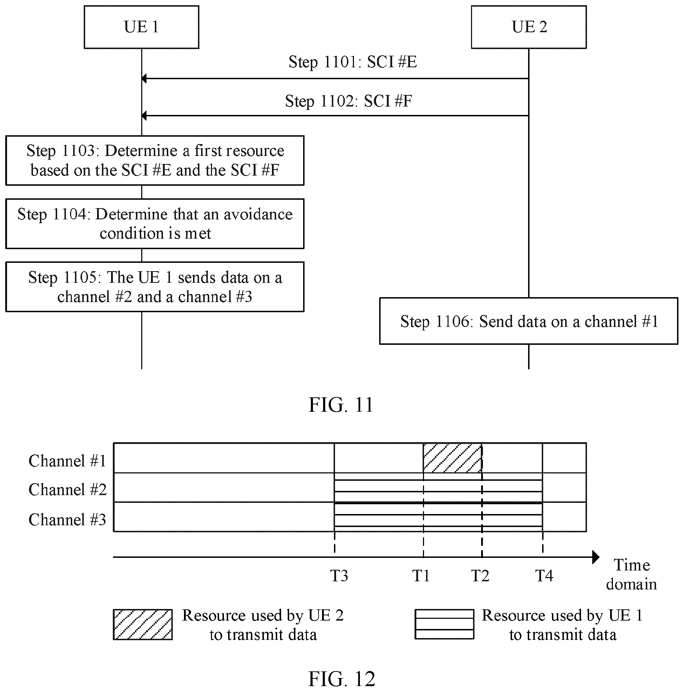

An embodiment of this application provides a communication method. As shown in FIG. 11, that first indication information and fourth indication information are carried in first-stage SCI is used as an example, UE 1 is an example of a first terminal apparatus, UE 2 is an example of a second terminal apparatus, COT 1 is an example of a first resource, COT 2 is an example of a second resource, SCI #E is an example of the first-stage SCI, and SCI #F is an example of second-stage SCI. The method may include the following steps.

Step 1101: The UE 2 sends the SCI #E to the UE 1, and correspondingly, the UE 1 receives the SCI #E.

The SCI #E is carried on a PSCCH. The SCI #E includes resource indication information, data priority information, a reference signal, and a format of the SCI #F. Specifically, refer to related descriptions of the first indication information and the fourth indication information in step 501. Details are not described again.

Step 1102: The UE 2 sends the SCI #F to the UE 1, and correspondingly, the UE 1 receives the SCI #F.

The SCI #F is carried on a PSSCH. The SCI #F includes an LBT parameter of the UE 2.

Step 1103: The UE 1 determines a first resource based on the SCI #E and the SCI #F.

As shown in FIG. 12, the first resource is a time frequency resource on a channel #3 within a range of the COT 1, and a time length between T1 and T2 is a time length of the COT 1.

Step 1104: Determine that an avoidance condition is met.

In addition to A, B, C, and D in step 502, the avoidance condition in this step further includes: A quantity of remaining available channels of the UE 1 is greater than or equal to a threshold T'ₜₕ. The quantity of remaining available channels may be a quantity of channels occupied by the UE 1 other than a channel on which a resource reserved by the UE 2 is located, and the threshold T'ₜₕ may be determined by a total quantity of channels occupied by the UE 1. For example, as shown in FIG. 12, the UE 1 preempts three channels: a channel #1, a channel #2, and the channel #3. It is assumed that the resource reserved by the UE 2 is on the channel #1, the threshold T'ₜₕ is 1, and the quantity of remaining available channels of the UE 1 is 2 and is greater than the threshold. In this case, the UE 1 may avoid the channel #1 for the UE 2 to send data, and the channel #2 and the channel #3 may be used by the UE 1 to send data.

Optionally, the UE 1 may perform resource re-assessment or preemption detection. For details, refer to descriptions in step 502. Details are not described again.

Step 1105: The UE 1 sends data on the channel #2 and the channel #3.

Specifically, as shown in FIG. 12, the UE 1 sends data on the channel #2 and the channel #3 on time frequency resources within a range of the COT 2, and a time length between T3 and T4 is a time length of the COT 2.

Step 1106: The UE 2 sends data on the channel #1.

Specifically, the UE 2 sends the data on the channel #1 on a time frequency resource within the range of the COT 1.

In the method, the UE 1 preempts a plurality of channels; and when the resource reserved by the UE 2 is on one of the plurality of channels preempted by the UE 1, the UE 1 may avoid the channel, and send data on another available channel, and the channel is used by the UE 2 to send data, so that the data of the UE 2 can be sent in time. This meets a service requirement, and improves communication efficiency.

Embodiments described in this specification may be independent solutions, or may be combined based on internal logic. All these solutions fall within the protection scope of this application. It should be understood that the steps in the foregoing embodiments are merely intended to clearly describe the technical solutions of embodiments, and a sequence of performing the steps is not limited.

In the foregoing embodiments provided in this application, the methods provided in embodiments of this application are described from a perspective of interaction between devices. To implement functions in the methods provided in the foregoing embodiments of this application, a network device or a terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into the modules is an example, and is merely logical function division. In actual implementation, another division manner may be used. In addition, functional modules in embodiments of this application may be integrated into one processor, may exist alone physically, or two or more modules may be integrated into one module. The integrated module may be implemented in a form of hardware, or may be implemented in a form of a software functional module.

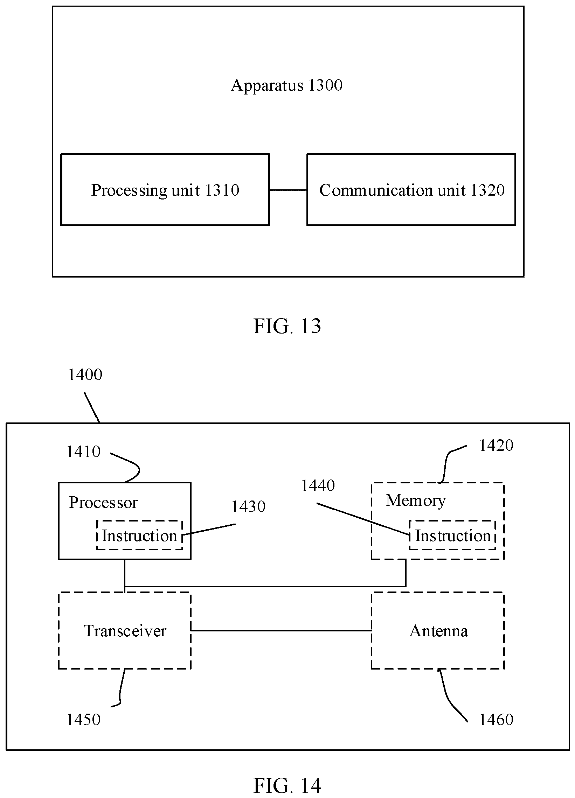

The following describes in detail a communication apparatus provided in embodiments of this application with reference to FIG. 13 and FIG. 14. It should be understood that descriptions of apparatus embodiments correspond to descriptions of method embodiments. Therefore, for content that is not described in detail, refer to the method embodiments. For brevity, details are not described herein again.

Same as the foregoing idea, as shown in FIG. 13, an embodiment of this application further provides an apparatus 1300 that is configured to implement functions of a session management function network element in the foregoing methods. For example, the apparatus may be a software module or a chip system. In this embodiment of this application, the chip system may include a chip, or may include a chip and another discrete component. The apparatus 1300 may include a processing unit 1310 and a communication unit 1320.

In this embodiment of this application, the communication unit may also be referred to as a transceiver unit, and may include a sending unit and/or a receiving unit, which are respectively configured to perform steps of sending and receiving by the session management function network element in the foregoing method embodiments.

The communication unit may also be referred to as a transceiver, a transceiver device, a transceiver apparatus, or the like. The processing unit may also be referred to as a processor, a processing board, a processing module, a processing apparatus, or the like. Optionally, a component that is in the communication unit 1320 and that is configured to implement a receiving function may be considered as a receiving unit, and a component that is in the communication unit 1320 and that is configured to implement a sending function may be considered as a sending unit. In other words, the communication unit 1320 includes the receiving unit and the sending unit. The communication unit sometimes may also be referred to as a transceiver device, a transceiver, an interface circuit, or the like. The receiving unit sometimes may also be referred to as a receiver device, a receiver, a receiving circuit, or the like. The sending unit sometimes may also be referred to as a transmitter device, a transmitter, a transmitting circuit, or the like.

When the communication apparatus 1300 performs functions of the first terminal apparatus in a procedure shown in any one of FIG. 5 to FIG. 11 in the foregoing embodiments,
the communication unit may be configured to: receive sidelink control information, and send data, and
the processing unit may be configured to: parse the sidelink control information, determine a transmission resource, determine a first channel occupation status, determine whether an avoidance condition is met, and/or perform an LBT process, and the like.

When the communication apparatus 1300 performs functions of the second terminal apparatus in a procedure shown in any one of FIG. 5 to FIG. 12 in the foregoing embodiments,
the communication unit may be configured to: send sidelink control information, receive second indication information, and/or send data, and
the processing unit may be configured to determine a transmission resource, perform an LBT process, and/or the like.

The foregoing is merely an example. The processing unit 1310 and the communication unit 1320 may further perform other functions. For more detailed descriptions, refer to related descriptions in the method embodiments shown in FIG. 5 to FIG. 12 or other method embodiments. Details are not described herein again.

FIG. 14 shows an apparatus 1400 according to an embodiment of this application, which may be an implementation of a hardware circuit. The communication apparatus is applicable to the foregoing flowcharts, and performs functions of the terminal device or the network device in the foregoing method embodiments. For ease of description, FIG. 14 shows only main components of the communication apparatus.

The communication apparatus 1400 may be a terminal device, and can implement functions of the first terminal apparatus or the second terminal apparatus in the methods provided in embodiments of this application. Alternatively, the communication apparatus 1400 may be an apparatus that can support the first terminal apparatus or the second terminal apparatus in implementing corresponding functions in the methods provided in embodiments of this application. The communication apparatus 1400 may be a chip system. In this embodiment of this application, the chip system may include a chip, or may include a chip and another discrete component. For a specific function, refer to descriptions in the foregoing method embodiments.

The communication apparatus 1400 includes one or more processors 1410, configured to implement or support the communication apparatus 1400 in implementing functions of the first terminal apparatus or the second terminal apparatus in the methods provided in embodiments of this application. For details, refer to detailed descriptions in the method examples. Details are not described herein again. The processor 1410 may also be referred to as a processing unit or a processing module, and may implement a specific control function. The processor 1410 may be a general-purpose processor or a dedicated processor. For example, the apparatus includes a central processing unit, an application processor, a modem processor, a graphics processing unit, an image signal processor, a digital signal processor, a video codec processor, a controller, a memory, and/or a neural network processor. The central processing unit may be configured to: control the communication apparatus 1400, execute a software program, and/or process data. Different processors may be independent components, or may be integrated into one or more processors, for example, integrated into one or more application-specific integrated circuits. It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

Optionally, the communication apparatus 1400 includes one or more memories 1420, configured to store instructions 1440. The instructions may be run on the processor 1410, to enable the communication apparatus 1400 to perform the methods described in the foregoing method embodiments. The memory 1420 is coupled to the processor 1410. Coupling in this embodiment of this application may be indirect coupling or a communication connection between apparatuses, units, or modules in an electrical form, a mechanical form, or another form, and is used for information exchange between the apparatuses, the units, or the modules. The processor 1410 may cooperate with the memory 1420. At least one of the at least one memory may be included in the processor. It should be noted that the memory 1420 is not mandatory. Therefore, the memory 1420 is shown by using a dashed line in FIG. 14.

Optionally, the memory 1420 may further store data. The processor and the memory may be separately disposed, or may be integrated together. In this embodiment of this application, the memory 1420 may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory in this embodiment of this application may be a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium of any other form well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

Optionally, the communication apparatus 1400 may include instructions 1430 (which may also be referred to as code or programs sometimes), and the instructions 1430 may be run on the processor, to enable the communication apparatus 1400 to perform the methods described in the foregoing embodiments. The processor 1410 may store data.

Optionally, the communication apparatus 1400 may further include a transceiver 1450 and an antenna 1406. The transceiver 1450 may be referred to as a transceiver unit, a transceiver module, a transceiver device, a transceiver circuit, a transceiver, an input/output interface, or the like, and is configured to implement a receiving and sending function of the communication apparatus 1400 through the antenna 1406.

The processor 1410 and the transceiver 1450 described in this application may be implemented in an integrated circuit (integrated circuit, IC), an analog IC, a radio frequency integrated circuit (radio frequency identification, RFID), a mixed signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1400 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1400 may include more or fewer components, some components are integrated, or some components are split. The components may be implemented by hardware, software, or a combination of software and hardware.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first indication information from a second terminal apparatus, wherein the first indication information indicates a first resource, the first resource is a resource reserved by the second terminal apparatus for sending first data, and a resource corresponding to the first resource in frequency domain belongs to a first channel;
determining a second resource based on the first indication information; and
sending second data on the second resource, wherein a start time unit of the second resource is later than an end time unit of the first resource, and a resource corresponding to the second resource in frequency domain belongs to the first channel.

2. The method according to claim 1, wherein the method further comprises:
sensing, in a first sensing time unit by using a listen-before-talk process, that a state of the first channel is idle, and suspending the listen-before-talk process in the first sensing time unit based on the first resource, wherein the first sensing time unit is earlier than a start time unit of the first resource.

3. The method according to claim 1 or 2, wherein the suspending the listen-before-talk process in the first sensing time unit based on the first resource comprises:
when determining that duration between the start time unit of the first resource and the first sensing time unit is less than or equal to a first threshold, suspending the listen-before-talk process in the first sensing time unit, wherein the first threshold is greater than 0 and less than or equal to a delay requirement of the second data.

4. The method according to claim 2 or 3, wherein the suspending the listen-before-talk process in the first sensing time unit based on the first resource comprises:
after progressively decreasing a value of a counter from Q to M, suspending the progressive decrease, wherein 1≤M≤Q, and Q is an initial value of the counter.

5. The method according to claim 4, wherein the method further comprises:
sensing, in a second sensing time unit, that a state of the first channel is idle, and continuing to progressively decrease the value of the counter from M, wherein the second sensing time unit is later than the end time unit of the first resource, and the start time unit of the second resource is a time unit in which the value of the counter is progressively decreased to 0.

6. The method according to any one of claims 1 to 5, wherein the method further comprises:
receiving a first reference signal from the second terminal apparatus; and
determining that power for receiving the first reference signal is greater than or equal to a reference signal received power threshold.

7. The method according to any one of claims 1 to 6, wherein the method further comprises:
receiving third indication information from the second terminal apparatus, wherein the third indication information indicates a destination end to which the second terminal apparatus sends data.

8. The method according to any one of claims 1 to 7, wherein the method further comprises:
receiving fourth indication information from the second terminal apparatus, wherein the fourth indication information indicates a priority of the first data; and
determining that the priority of the first data is higher than or equal to a priority of the second data.

9. A communication method, comprising:
receiving first indication information from a second terminal apparatus, wherein the first indication information indicates a first resource, and the first resource is a resource reserved by the second terminal apparatus for sending second data;
determining a third resource based on the first resource and first channel occupancy time, wherein the third resource belongs to the first resource and the first channel occupancy time, the third resource is used by the second terminal apparatus to send first data, and a start time unit of the first channel occupancy time is earlier than a start time unit of the first resource; and
sending the second data on a fourth resource, wherein the fourth resource belongs to a resource other than the third resource in the first channel occupancy time.

10. The method according to claim 9, wherein the method further comprises:
sending second indication information to the second terminal apparatus, wherein the second indication information indicates the third resource.

11. The method according to claim 10, wherein the sending second indication information to the second terminal apparatus comprises:
sending the second indication information to the second terminal apparatus in a first time period, wherein a start moment of the first time period falls within a range between a start time unit of the fourth resource and a start time unit of the third resource, and duration between the start moment of the first time period and the start time unit of the fourth resource is greater than or equal to a second threshold.

12. The method according to any one of claims 9 to 11, wherein the method further comprises:
receiving third indication information from the second terminal apparatus, wherein the third indication information indicates a destination end to which the second terminal apparatus sends data.

13. The method according to any one of claims 9 to 12, wherein the method further comprises:
receiving a first reference signal from the second terminal apparatus; and
determining that power for receiving the first reference signal is greater than or equal to a reference signal received power threshold.

14. The method according to any one of claims 9 to 13, wherein the method further comprises:
receiving fourth indication information from the second terminal apparatus, wherein the fourth indication information indicates a priority of the first data; and
determining that the priority of the first data is higher than or equal to a priority of the second data.

15. The method according to any one of claims 9 to 14, wherein the first indication information is carried in at least one of first-stage sidelink control information, second-stage sidelink control information, a sidelink media access control control element, or PC5 radio resource control signaling from the second terminal apparatus.

16. A communication method, comprising:
sending first indication information, wherein the first indication information indicates a first resource, and the first resource is a resource reserved by a second terminal apparatus for sending first data; and
sending the first data on a third resource, wherein the third resource is determined based on the first resource and first channel occupancy time, a start time unit of the first channel occupancy time is earlier than a start time unit of the first resource, and the third resource belongs to the first resource and the first channel occupancy time.

17. The method according to claim 16, wherein the method further comprises:
receiving second indication information from a first terminal apparatus, wherein the second indication information indicates the third resource.

18. The method according to claim 17, wherein the receiving second indication information from a first terminal apparatus comprises:
receiving the second indication information from the first terminal apparatus in a first time period, wherein
a start moment of the first time period falls within a range between a start time unit of a fourth resource and a start time unit of the third resource, and duration between the start moment of the first time period and the start time unit of the fourth resource is greater than or equal to a second threshold.

19. The method according to any one of claims 16 to 18, wherein the method further comprises:
sending third indication information, wherein the third indication information indicates that the first terminal apparatus is a destination end to which the first data is sent.

20. The method according to any one of claims 16 to 19, wherein the method further comprises:
sending fourth indication information, wherein the fourth indication information indicates a priority for sending the first data.

21. The method according to any one of claims 16 to 20, wherein the method further comprises:
sending a first reference signal.

22. The method according to any one of claims 16 to 21, wherein
the first indication information is carried in at least one of first-stage sidelink control information, second-stage sidelink control information, a sidelink media access control control element, or PC5 radio resource control signaling from the second terminal apparatus.

23. A communication apparatus, comprising a module configured to perform the method according to any one of claims 1 to 8 or claims 9 to 15.

24. A communication apparatus, comprising a module configured to perform the method according to any one of claims 16 to 22.

25. A communication system, comprising the communication apparatus according to claim 23 and the communication apparatus according to claim 24.

26. A computer-readable storage medium, wherein the computer-readable storage medium is configured to store a computer program, and when the computer program is run on a computer, the computer is enabled to perform the method according to any one of claims 1 to 8, the method according to any one of claims 9 to 15, and/or the method according to any one of claims 16 to 22.

27. An apparatus, comprising a processor and a communication interface, wherein the processor is configured to read instructions, to perform the method according to any one of claims 1 to 8, the method according to any one of claims 9 to 15, and/or the method according to any one of claims 16 to 22.

28. The apparatus according to claim 27, wherein the apparatus is a chip.
